(19) Europäisches Patentamt

European Patent Office

Office européen des brevets

(11) **EP 4 644 862 A1**

(12) **EUROPEAN PATENT APPLICATION**

(43) Date of publication:
**05.11.2025 Bulletin 2025/45**

(21) Application number: **25173858.9**

(22) Date of filing: **01.05.2025**

(51) International Patent Classification (IPC):
**G01N 15/14** $^{(2024.01)}$        **G01N 15/1434** $^{(2024.01)}$
**G01N 21/00** $^{(2006.01)}$        **G01N 15/1404** $^{(2024.01)}$

(52) Cooperative Patent Classification (CPC):
**G01N 15/1436; G01N 15/14; G01N 15/1459;**
**G01N 15/1484;** G01N 15/1404

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.05.2024 US 202463642501 P**

(71) Applicant: **Becton, Dickinson and Company Franklin Lakes, NJ 07417-1880 (US)**

(72) Inventors:
• **Ghazi, Christopher**
  **Franklin Lakes, 07417-1880 (US)**
• **Zou, Jizuo**
  **Franklin Lakes, 07417-1880 (US)**

(74) Representative: **Arnold & Siedsma**
  **Bezuidenhoutseweg 57**
  **2594 AC The Hague (NL)**

(54) **FLOW CELLS HAVING AN OPTIMIZED FLOW CHANNEL GEOMETRY, FLOW CYTOMETERS INCLUDING THE SAME, AND METHODS OF USE THEREOF**

(57)    Flow cells having an optimized flow channel geometry are provided. Flow cells of interest include a cuvette configured to transport particles in a flow stream, the cuvette having a flow channel with a rectangular cross-section and an aspect ratio ranging from 1.0 to 1.4. Flow cytometers having the subject flow cells and methods of use and assembly thereof are also provided.

FIG. 3

EP 4 644 862 A1

# FIG. 3 (Cont.)

**Description**

This application claims priority to the filing date of United States Provisional Patent Application erial No. 63/642,501 filed May 3, 2024.

**INTRODUCTION**

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged. In some previous implementations, flow cells have had a square channel with a unity aspect ratio for cell sorters, and a rectangular channel having an aspect ratio of approximately 2.4 for analyzers.

The parameters measured using a flow cytometer typically include light at the excitation wavelength scattered by the particle in a narrow angle along a mostly forward direction, referred to as forward-scatter (FSC), the excitation light that is scattered by the particle in an orthogonal direction to the excitation laser, referred to as side-scatter (SSC), and the light emitted from fluorescent molecules in one or more detectors that measure signal over a range of spectral wavelengths, or by the fluorescent dye that is primarily detected in that specific detector or array of detectors. Different cell types can be identified by their light scatter characteristics and fluorescence emissions resulting from labeling various cell proteins or other constituents with fluorescent dye-labeled antibodies or other fluorescent probes.

**SUMMARY**

It was realized that a unity aspect ratio for cell sorters maximizes fluidics stability, which is especially important for cell sorting, and also has good imaging optical qualities. However, optical collection efficiency is highly reduced due to scatter and clipping of collected light. In addition, an aspect ratio of 2.4 maximizes optical collection efficiency without the core stream ellipse getting terribly stretched. However, this high of an aspect ratio interferes with optical imaging collection. As such, a flow cell having an optimized geometry that provides the best result across these different considerations is desirable. The flow cells, flow cytometers and methods of the disclosure satisfy this desire.

Aspects of the disclosure include flow cells having an optimized flow channel geometry. Flow cells of interest include a cuvette configured to transport particles in a flow stream, the cuvette having a flow channel with a rectangular cross-section and an aspect ratio ranging from 1.0 to 1.4 (e.g., about 1.2). In some cases, the length of the rectangular cross-section ranges from 275 $\mu$m to 325 $\mu$m (e.g., 295 $\mu$m to 305 $\mu$m). In certain instances, the rectangular cross-section of the flow channel has a width ranging from 225 $\mu$m to 275 $\mu$m (e.g., 245 $\mu$m to 255 $\mu$m). In some cases, a surface of the cuvette is separated from the flow channel by a distance ranging from 1.9 mm to 2.1 mm (e.g., 2.02 mm to 2.04 mm). In additional cases, a surface (e.g., another surface) of the cuvette is separated from the flow channel by a distance ranging from 5 mm to 5.2 mm (e.g., 5.07 mm to 5.09 mm). One or more surfaces of the cuvette may, in certain implementations, have an anti-reflective coating. In embodiments, the cuvette has a height perpendicular to the rectangular cross-section of 5 mm to 9 mm (e.g., 7 mm to 7.2 mm). In certain cases, the cuvette has a length ranging from 8 mm to 12 mm (e.g., 10 mm to 10.2 mm). In some cases, a width of the cuvette ranges from 2 mm to 6 mm (e.g., 4 mm to 4.1 mm). In select instances, a ratio of a width of the rectangular cross-section of the flow channel to a width of the cuvette ranges from 1:8.9 to 1:21.8 (e.g., 1:16.1 to 1:16.3). In certain cases, a ratio of a width of the rectangular cross-section of the flow channel to a height perpendicular to the rectangular cross-section ranges from 1:22.2 to 1:32.7 (e.g., 1:28.2 to 1:28.6). In some instances, a ratio of a length of the rectangular cross-section of the flow channel to a length of the cuvette ranges from 1:29.1 to 1:40 (e.g., 1:33.4 to 1:33.9). In embodiments, a ratio of a length of the rectangular cross-section of the flow channel to a height perpendicular to the rectangular cross-section ranges from 1:18.2 to 1:27.7 (e.g., 1:23.6 to 1:23.7). Cuvettes of interest may be comprised of, e.g., fused silica. In certain versions, the flow cell has a collection efficiency of 20% to 40% (e.g., 23% to 25%). In some instances, the rectangular cross-section of the flow channel is symmetric within a width, length, or both, of the cuvette. In embodiments, the flow channel extends through a height of the cuvette.

Aspects of the disclosure also include flow cytometers having the subject flow cells (e.g., described above and herein). Flow cytometers of interest include a light source configured to irradiate the particles in the flow stream at an interrogation point within the flow cell, and a detector configured to collect light emitted by the irradiated particles. In some cases, the flow cytometer is configured as an imaging flow cytometer. In some such cases, the light source comprises a light beam generator component configured to generate at least a first beam of frequency shifted light and a second beam of frequency shifted light. For example, the flow cytometer may include an acousto-optic deflector (AOD). In some cases, flow cytometers include a sample fluid line configured to provide the particles to the flow cell. In some such cases, the flow cytometer is configured to provide the particles in the flow stream at a velocity ranging from 0.1 m/s to 10 m/s. In some versions, the flow cytometer is configured to operate in an imaging mode in which the flow cytometer is configured to provide the particles in the flow stream to the flow cell at a first velocity, and a non-imaging mode in which the flow cytometer is configured to provide the particles in the flow stream to the flow cell at a second velocity that is greater than the first velocity. In some such versions, the first velocity ranges from 0.5 m/s to 1.5 m/s (e.g., 0.9 m/s to 1.1 m/s). Similarly, the second velocity may range in some cases from 3 m/s to 8 m/s (e.g., 5 m/s to 6 m/s). A ratio between the first and second velocities may range in select instances from 1:12 to about 1:2. Flow cytometers according to some embodiments additionally include a collection lens in optical communication with the flow cell and the detector. In some cases, the collection lens has a collection angle ($\theta$) of 90 degrees to about 110 degrees (e.g., 97 degrees to 103 degrees). In embodiments, flow cytometers include an objective lens in optical communication with the light source and the flow cell.

Aspects of the disclosure also include methods of analyzing a sample fluid. Methods of interest include introducing a sample fluid into a flow cytometer of the disclosure (e.g., as described above and herein), and irradiating the particles in the flow stream to analyze the sample fluid. In some cases, methods include operating in an imaging mode in which the flow cytometer is configured to provide the particles in the flow stream to the flow cell at a first velocity, and a non-imaging mode in which the flow cytometer is configured to provide the particles in the flow stream to the flow cell at a second velocity that is greater than the first velocity. In addition to methods of sample analysis, methods of the disclosure also include methods of assembling a flow cytometer. Such methods include positioning a flow cell of the disclosure into a flow cytometer. In some cases, methods also include positioning a collection lens in optical communication with the flow cell and the detector (e.g., coupling the collection lens to the cuvette). In some cases, methods also include positioning an objective lens in optical communication with the light source and the flow cell.

## BRIEF DESCRIPTION OF THE FIGURES

The disclosure may be best understood from the following detailed description when read in conjunction with the accompanying drawings. Included in the drawings are the following figures:

FIG. 1A-1C presents flow cells having an optimized flow channel geometry according to certain embodiments.

FIG. 2 presents a flow cytometric system according to certain embodiments.

FIG. 3 depicts an image-enabled particle sorter according to certain embodiments.

FIG. 4 depicts a functional block diagram of a particle analysis system according to certain embodiments.

FIG. 5 depicts a depicts a functional block diagram for one example of a control system according to certain embodiments.

FIG. 6A-6B depict schematic drawings of a particle sorter system according to certain embodiments.

FIG. 7 depicts a block diagram of a computing system according to certain embodiments.

FIG. 8 presents a matrix showing the status of different flow channel dimensions relative to different considerations.

FIG. 9 graphically depicts modeling variation in collection efficiency with bead displacement.

FIG. 10A-10B graphically depict modeling variation in collection efficiency with bead displacement.

## DETAILED DESCRIPTION

Flow cells having an optimized flow channel geometry are provided. Flow cells of interest include a cuvette configured to transport particles in a flow stream, the cuvette having a flow channel with a rectangular cross-section and an aspect ratio ranging from 1.0 to 1.4. Flow cytometers having the subject flow cells and methods of use and assembly thereof are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, are not to be construed as necessarily limited in any way by the construction of "means" or "steps" limitations, but are to be accorded the full scope of the meaning and equivalents of the definition provided by the claims.

## FLOW CELLS

Aspects of the disclosure include flow cells having an optimized geometry. By "optimized" geometry, it is meant that the geometry of the flow cell allows a skilled artisan practicing flow cytometry to obtain superior results more efficiently as compared to a flow cell that is not optimized. For example, flow cells of the disclosure may allow for high performance across different operating modes of a flow cytometer. As discussed herein, an "operating mode" refers to a particular manner in which a given flow cytometer may be configured to irradiate particles and process signals received from the irradiated particles. In some cases, operating modes refer to a velocity of the flow stream. In addition or alternatively, operating modes refer to a type of flow cytometry being performed. For example, the operating mode may refer to an imaging mode (e.g., obtaining images of particles in the flow stream), or a non-imaging mode. In some embodiments, flow cells of the disclosure allow for high performance across 2 or more operating modes, 3 or more operating modes, 4 or more operating modes, 5 or more operating modes, 6 or more operating modes, 7 or more operating modes, 8 or more operating modes, 9 or more operating modes, and including 10 or more operating modes. By "high performance" it is meant that flow cells of the disclosure produce results that are optimal with respect to certain metrics. Metrics of interest may include, but are not limited to, one or more of fluidic stability (e.g., maintaining a desired shape of the core stream), imaging optical quality, optical collection efficiency, and the like. For example, collection efficiencies may range in some instances from 20% to 40%, such as 21% to 30%, including 23% to 25%. In select cases, the flow cell of the disclosure may be characterized by a collection efficiency of (or approximating) 24%.

Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 $\mu$m represents the optical axis of light emitted by the light source, the interrogation point may range from -50 $\mu$m to 50 $\mu$m, such as -25 $\mu$m to 40 $\mu$m, and including -15 $\mu$m to 30 $\mu$m. Depending on certain considerations (e.g., the number and arrangement of lasers), multiple irradiation points may exist within the flow cells.

Cuvettes of the disclosure have a flow channel with a rectangular cross-section and an aspect ratio ranging from 1.0 to 1.4. The term "aspect ratio" is used herein in its conventional sense to describe a ratio of a length to width. Aspect ratios of interest may range from 1.0 to 1.4, such as 1.1 to 1.3, such as 1.15 to 1.25, such as 1.16 to 1.24, such as 1.17 to 1.23, such as 1.18 to 1.22, and including 1.19 to 1.21. In some instances, the aspect ratio is at least 1.0 to 1.05, 1.05 to 1.1, 1.1 to 1.15, 1.15 to 1.2, 1.2 to 1.25, 1.25 to 1.3, 1.3 to 1.35 or 1.35 to 1.4. In some instances, the aspect ratio is at 1.0 to at most 1.05, 1.05 to at most 1.1, 1.1 to at most 1.15, 1.15 to at most 1.2, 1.2 to at most 1.25, 1.25 to at most 1.3, 1.3 to at most 1.35 or 1.35 to at most 1.4. In some cases, the aspect ratio is or approximates 1.2. In some cases, the aspect ratio may be 1.0, 1.1, 1.2, 1.3, or 1.4, as well as any intervening value therebetween. Lengths and widths of the rectangular cross-section may in some cases vary as long as they correspond to the above-described aspect ratio. In some cases, the rectangular cross-section of the flow channel has a length ranging from 275 $\mu$m to 325 $\mu$m, such as 290 $\mu$m to 310 $\mu$m, such as 295 $\mu$m to 305 $\mu$m, such as 296 $\mu$m to 304 $\mu$m, such as 297 $\mu$m to 303 $\mu$m, such as 298 $\mu$m to 302 $\mu$m, and including 299 $\mu$m to 301 $\mu$m. In some cases, the length of the rectangular cross-section may be 295 $\mu$m, 296 $\mu$m, 297 $\mu$m, 298 $\mu$m, 299 $\mu$m, 300 $\mu$m, 301 $\mu$m, 302 $\mu$m, 303 $\mu$m, 304 $\mu$m, or 305 $\mu$m, as well as any intervening value therebetween. In some cases, the length of the rectangular cross-section is or approximates 300 $\mu$m. Furthermore, in some embodiments, the rectangular cross-section of the flow channel has a width ranging from 225 $\mu$m to 275 $\mu$m, such as 240 $\mu$m to 260 $\mu$m, such as 245 $\mu$m to 255 $\mu$m, such as 246 $\mu$m to 254 $\mu$m, such as 247 $\mu$m to 253 $\mu$m, such as 248 $\mu$m to 252 $\mu$m, and including 249 $\mu$m to 251 $\mu$m. In some cases, the width of the rectangular cross-section may be 245 $\mu$m, 246 $\mu$m, 247 $\mu$m, 248 $\mu$m, 249 $\mu$m, 250 $\mu$m, 251 $\mu$m, 252 $\mu$m, 253 $\mu$m, 254 $\mu$m, or 255 $\mu$m, as well as any intervening value therebetween. In some cases, the width is or approximates 250 $\mu$m.

As explained above and demonstrated below in the Experimental section, use of flow cells consistent with the above aspect ratios, lengths and widths may result in high performance across different flow cytometer operating modes, e.g., when operated in non-imaging (e.g., analyzing) or imaging modes. As summarized above, the present disclosure recognizes that with lower aspect ratios, optical collection efficiency is highly reduced due to scatter and clipping of collected light. For example, an aspect ratio of 2.4 maximizes optical collection efficiency without the core stream ellipse getting terribly stretched. The present disclosure also recognizes that fluidics performance for imaging (and sorting) modes worsens with increasing aspect ratio for several reasons and is best when it approaches unity. Rectangular flow channels cause the core stream to become roughly elliptical in shape, with higher aspect ratios "stretching" the ellipse more. The more stretched the core stream ellipse becomes, the greater spatial variation in actual particle location within the core stream. This can cause the light of different particles to be interrogated and/or collected differently, e.g., getting different illumination from a non-uniform (Gaussian) beam or from being more out of focus of the collection lens. A more stretched-out core stream also has a wider variation in particle velocities due to the parabolic nature of velocity profiles of flow in the cuvette. With more variation in velocity, particle arrival times can vary by larger amounts and cause issues with laser delay stability, especially at slower imaging velocities. Travelling the same distance at slower imaging velocities amplifies the arrival time difference between particles traveling at different velocities. Rectangular flow channels also have higher shear forces in the narrow direction than square channels. This can magnify normally-occurring fluidic instabilities, as well as put more stress on particles in the core stream. Rectangular flow channels also have higher pressure drops per unit area from friction losses, and therefore require higher pressures to drive the same flow. It was realized that flow cell parameters described herein where the aspect ratio ranges from 1.1 to 1.4 provide an optimal balance between these and other considerations.

The positioning of the flow channel within the cuvette may in some cases vary. In some instances, a surface of the cuvette is separated from the flow channel by a distance ranging from 1.9 mm to 2.1 mm, such as 2.00 mm to 2.05 mm, and including 2.02 mm to 2.04 mm. In some cases, the surface of the cuvette may be separated from the flow channel by a distance of 2.00 mm, 2.01 mm, 2.02 mm, 2.03 mm, 2.04 mm, or 2.05, as well as any intervening value therebetween. In certain instances, the surface of the cuvette is separated from the flow channel by 2.03 mm. In select versions, the surface of the cuvette is a surface of a length of the cuvette. In some embodiments, another (e.g., second) surface of the cuvette is separated from the flow channel by a distance ranging from 5 mm to 5.2 mm, such as 5.05 mm to 5.1 mm, and including 5.07 mm to 5.09 mm. In some cases, the surface of the cuvette may be separated from the flow channel by a distance of 5.05 mm, 5.06 mm, 5.07 mm, 5.08 mm, 5.09 mm, or 5.10 mm, as well as any intervening value therebetween. In some cases, the surface of the cuvette is separated from the flow channel by a distance of or approximating 5.08 mm. In certain versions, this surface of the cuvette (e.g., the second) is a surface of a width of the cuvette. The distances between the flow channel and the surface of the cuvette may be measured either from a center of the flow channel or an edge of the flow channel. In select cases, the rectangular cross-section of the flow channel is symmetric within a width, length, or both, of the cuvette. For example, in some versions, the rectangular cross-section of the flow channel is symmetric within a width of the cuvette. In additional versions, the rectangular cross-section of the flow channel is symmetric within a length of the cuvette. In still additional versions, the rectangular cross-section of the flow channel is symmetric within both a length and width of the cuvette. In some versions, cuvettes having the aforementioned dimensions result in optimal imaging quality (e.g., in combination with optical components such as objective lenses and collection lenses, described in further detail below).

In some instances, one of more surfaces of the cuvette have an anti-reflective coating thereon. In certain instances, use of such a coating is sufficient to reduce reflection power loss. In some cases, the anti-reflective coating is a broadband anti-reflective coating. Anti-reflective coatings that may be employed include, but are not limited to, tantalum pentoxide ($Ta_2O_5$), silicon dioxide ($SiO_2$), magnesium fluoride ($MgF_2$), zirconium dioxide ($ZrO_2$), aluminum oxide ($Al_2O_3$), and the like, as well as combinations thereof. When present, the thickness of the anti-reflective coating may vary, where suitable coating thicknesses may be readily determined according to formulae known to those of skill in the art.

The dimensions of the cuvette itself may also vary. In some cases, the cuvette has a height perpendicular to the rectangular cross-section of 5 mm to 9 mm, such as 6 mm to 8 mm, such as 7.0 mm to 7.2 mm, such as 7.05 mm to 7.15 mm, such as 7.08 mm to 7.13 mm, and including 7.10 mm to 7.12 mm. In some cases, the height of the cuvette may be 7.05 mm, 7.06 mm, 7.07 mm, 7.08 mm, 7.09 mm, 7.10 mm, 7.11 mm, 7.12 mm, 7.13 mm, 7.14 mm, or 7.15 mm, as well as any intervening value therebetween. In certain cases, the height is or approximates 7.11 mm. In some cases, the cuvette has a length ranging from 8 mm to 12 mm, such as 9 mm to 11 mm, and including 10.0 mm to 10.2 mm. In certain instances, the length of the cuvette may be 5.10 mm, 5.11 mm, 5.12 mm, 5.13 mm, 5.14 mm, 5.15 mm, 5.16 mm, 5.17 mm, 5.18 mm, 5.19 mm, or 5.20 mm, as well as any intervening value therebetween. In some cases, the length of the cuvette is or approximates 5.16 mm. In select versions, a width of the cuvette ranges from 2 mm to 6 mm, such as 3 mm to 5 mm, such as 4.0 mm to 4.1 mm, such as 4.02 mm to 4.08 mm, and including 4.05 mm to 4.07 mm. In some implementations, the width of the cuvette may be 4.0 mm, 4.01 mm, 4.02 mm, 4.03 mm, 4.04 mm, 4.05 mm, 4.06 mm, 4.07 mm, 4.08 mm, 4.09 mm, or 4.10 mm, as well as any intervening value therebetween.

The present flow cell may also be described by certain ratios relating dimensions of the rectangular cross-section to dimensions of the cuvette. In some cases, a ratio of a width of the rectangular cross-section of the flow channel to a width of the cuvette ranges from 1:8.9 to 1:21.8, such as 1:12.5 to 1:19.2, and including 1:16.1 to 1:16.3. In embodiments, a ratio of a width of the rectangular cross-section of the flow channel to a height perpendicular to the rectangular cross-section ranges from 1:22.2 to 1:32.7, such as 1:25 to 1:30.1, and including 1:28.2 to 1:28.6. In certain instances, a ratio of a length of the rectangular cross-section of the flow channel to a length of the cuvette ranges from 1:29.1 to 1:40, such as 1:31 to 1:35.6, and including 1:33.4 to 1:33.9. In some cases, a ratio of a length of the rectangular cross-section of the flow channel to a height perpendicular to the rectangular cross-section ranges from 1:18.2 to 1:27.7, such as 1:20.7 to 1:25.8, and including 1:23.6 to 1:23.7.

In some embodiments, the sample flow stream emanates from an orifice at the distal end of the flow cell. Depending on the desired characteristics of the flow stream, the flow cell orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. In certain embodiments, flow cell of interest has a circular orifice. The size of the nozzle orifice may vary, in some embodiments ranging from 1 μm to 20000 μm, such as from 2 μm to 17500 μm, such as from 5 μm to 15000 μm, such as from 10 μm to 12500 μm, such as from 15 μm to 10000 μm, such as from 25 μm to 7500 μm, such as from 50 μm to 5000 μm, such as from 75 μm to 1000 μm, such as from 100 μm to 750 μm and including from 150 μm to 500 μm. In certain embodiments, the nozzle orifice is 100 μm.

In some embodiments, flow cells of the disclosure further include optical components integrated therewith and/or coupled thereto. In some such embodiments, flow cells include a collection lens. The collection lens may be any optical component configured to collect light from the interrogation zone(s) of the flow cell and direct it to one or more detectors or additional optical components (e.g., mirrors, lenses, etc., as appropriate). In certain cases, the collection lens is a collimating lens. For example, in some cases, the collimating lens is attached to an outer surface of the cuvette. The collimating lens may be attached to the outer surface of the cuvette via any suitable means, such as an optical adhesive or press fit/interference fit. In select cases, the collimating lens is an injection compression molded lens. In some instances, the collimating lens is a Fresnel lens. In alternative embodiments, the collection lens is not directly coupled to the flow cell but is considered a part of the flow cytometer. The numerical aperture (NA) of the collection lens may vary, and in some cases ranges from 0.75 to 1.5, such as 0.9 to 1.4, and including 1.1 to 1.3. In certain cases, the NA is or approximates 1.2. The collection lens when used in conjunction with the cuvette may have a collection angle ($\theta$) that varies. In some cases, the collection lens has a collection angle that satisfies the following equation:

$$\tan\frac{\theta}{2} = \frac{a}{b}$$

where *a* is the length of the rectangular cross-section of the flow channel, and b is the width of the rectangular cross-section of the flow channel. In certain instances, the collection angle ($\theta$) ranges from 90 degrees to 110 degrees, such as 95 degrees to 105 degrees, and including 97 degrees to 103 degrees. Additional optical components may include, e.g., one or more objective lenses configured to focus light from one or more light sources (e.g., lasers) onto one or more interrogation points within the flow cell. Objective lenses may or may not be integrated with and/or coupled to the cuvette.

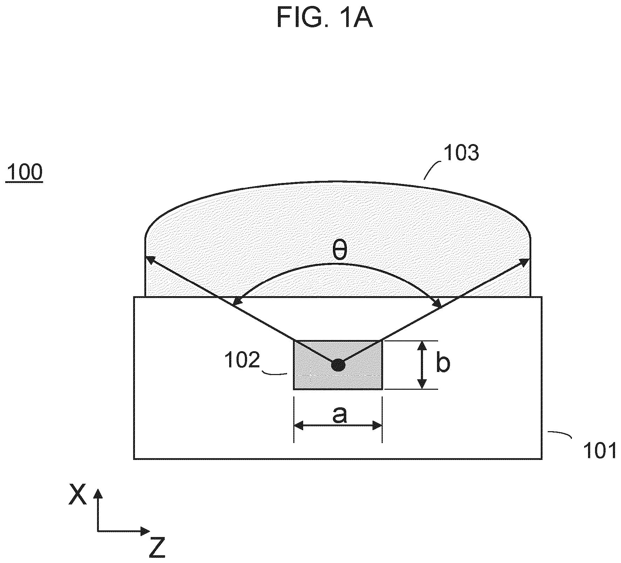

FIG. **1A-1C** present different views of a flow cell having optimized geometry according to certain embodiments of the disclosure. **FIG. 1A** depicts flow cell 100 in an X-Z direction. As shown in **FIG. 1A,** flow cell 100 includes cuvette 101 having a flow channel 102 running therethrough. Flow channel 102 has a rectangular cross-section, length *a*, and width b. The aspect ratio of the rectangular cross-section is taken as $\frac{a}{b}$ and accords with the above-described parameters for aspect ratios (e.g., ranging from 1.0 to 1.4). Also shown is collection lens 103 characterized by collection angle $\theta$. In the example of **FIG. 1A,** $\theta$ is consistent with the following equation:

$$\tan\frac{\theta}{2} = \frac{a}{b}$$

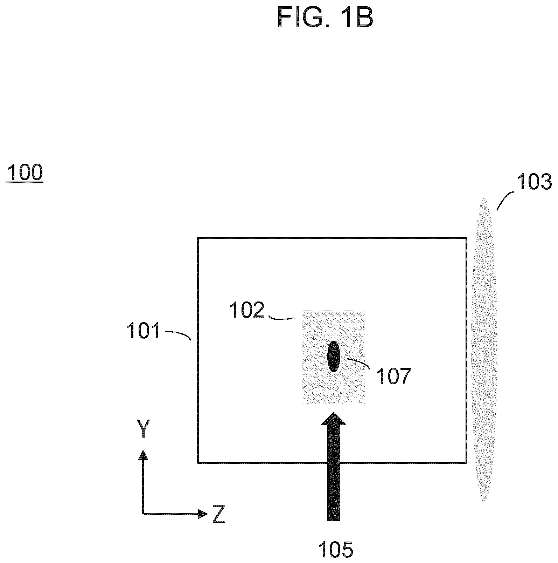

**FIG. 1B** presents flow cell 100 in a Y-Z direction and includes the same elements arranged as described above with respect to **FIG. 1A.** Also shown in **FIG. 1B** is core stream 107 having an elliptical shape. In addition, **FIG. 1B** shows light 105 that cuvette 101 is configured to receive from one or more light sources (e.g., lasers; not shown).

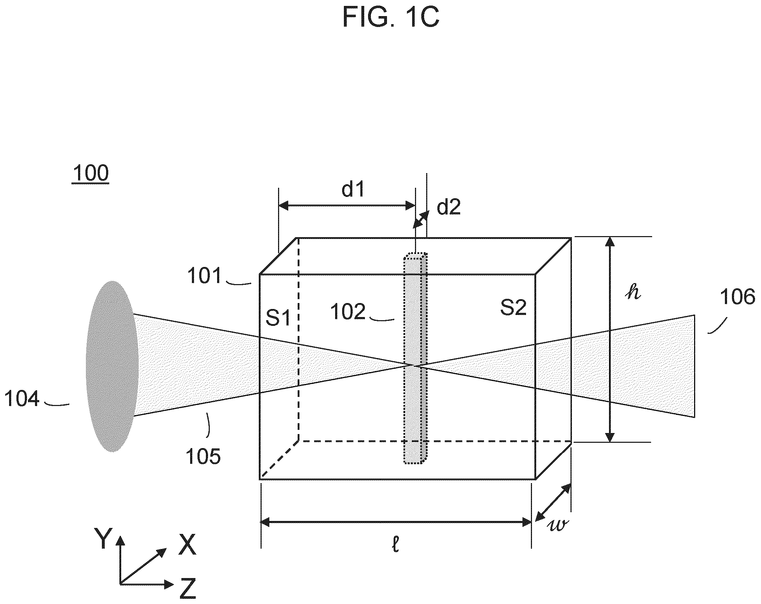

**FIG. 1C** presents a three-dimensional view of flow cell 100. As shown in **FIG. 1C,** light 105 from objective lens 104 enters cuvette 101 at surface S1 and irradiates flow channel 102 at an interrogation point. Light resulting from this interaction exits cuvette 101 at surface S2 and is collected by collection lens 103 (not shown). Cuvette 101 is characterized by length $\ell$, width *w* and height *h* which accord with the parameters set forth for cuvette length, width and height provided above. Flow channel 102 is separated from surface S1 by distance d1. In addition, flow channel 102 is separated from surface S2 by distance d2. These distances accord with the parameters set forth above for distances separating surfaces of the cuvette to the flow channel.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be 1 $\mu$L/min or more, such as 2 $\mu$L/min or more, such as 3 $\mu$L/min or more, such as 5 $\mu$L/min or more, such as 10 $\mu$L/min or more, such as 15 $\mu$L/min or more, such as 25 $\mu$L/min or more, such as 50 $\mu$L/min or more and including 100 $\mu$L/min or more, where in some instances the rate of sample conveyed to the flow cell chamber by the sample injection port is 1 $\mu$L/sec or more, such as 2 $\mu$L/sec or more, such as 3 $\mu$L/sec or more, such as 5 $\mu$L/sec or more, such as 10 $\mu$L/sec or more, such as 15 $\mu$L/sec or more, such as 25 $\mu$L/sec or more, such as 50 $\mu$L/sec or more and including 100 $\mu$L/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

## FLOW CYTOMETERS

Aspects of the disclosure also include flow cytometers. Flow cytometers of interest include a flow cell of the disclosure. As described in detail above, flow cells of interest include a cuvette having a flow channel with a rectangular cross-section and an aspect ratio ranging from 1.0 to 1.4. In addition, flow cytometers of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein.

In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, $Nd:YVO_4$ laser, $Nd:YCa_4O(BO_3)_3$ laser, Nd:YCOB laser, titanium sapphire laser, thulim YAG laser, ytterbium YAG laser, $ytterbium_2O_3$ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example lasers in light beam generators of interest may be a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO4 laser, $Nd:YCa_4O(BO_3)_3$ laser, Nd:YCOB laser, titanium sapphire laser, thulim YAG laser, ytterbium YAG laser, $ytterbium_2O_3$ laser or cerium doped lasers and combinations thereof.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 $\mu$m or more, such as by 0.005 $\mu$m or more, such as by 0.01 $\mu$m or more, such as by 0.05 $\mu$m or more, such as by 0.1 $\mu$m or more, such as by 0.5 $\mu$m or more, such as by 1 $\mu$m or more, such as by 5 $\mu$m or more, such as by 10 $\mu$m or more, such as by 100 $\mu$m or more, such as by 500 $\mu$m or more, such as by 1000 $\mu$m or more and including by 5000 $\mu$m or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 $\mu$m or more, such as an overlap of 0.005 $\mu$m or more, such as an overlap of 0.01 $\mu$m or more, such as an overlap of 0.05 $\mu$m or more, such as an overlap of 0.1 $\mu$m or more, such as an overlap of 0.5 $\mu$m or more, such as an overlap of 1 $\mu$m or more, such as an overlap of 5 $\mu$m or more, such as an overlap of 10 $\mu$m or more and including an overlap of 100 $\mu$m or more.

In certain instances, light beam generators configured to generate two or more beams of frequency shifted light include laser excitation modules as described in U.S. Patent Nos. 9,423,353; 9,784,661 and 10,006,852 and U.S. Patent Publication Nos. 2017/0133857 and 2017/0350803.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from $0.01 \text{ cm}^2$ to $10 \text{ cm}^2$, such as from $0.05 \text{ cm}^2$ to $9 \text{ cm}^2$, such as from $0.1 \text{ cm}^2$ to $8 \text{ cm}^2$, such as from $0.5 \text{ cm}^2$ to $7 \text{ cm}^2$ and including from $1 \text{ cm}^2$ to $5 \text{ cm}^2$.

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from $0.01 \text{ cm}^2$ to $10 \text{ cm}^2$, such as from $0.05 \text{ cm}^2$ to $9 \text{ cm}^2$, such as from, such as from $0.1 \text{ cm}^2$ to $8 \text{ cm}^2$, such as from $0.5 \text{ cm}^2$ to $7 \text{ cm}^2$ and including from $1 \text{ cm}^2$ to $5 \text{ cm}^2$.

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto™ flow cytometer, BD Biosciences FACSCanto™ II flow cytometer, BD Accuri™ flow cytometer, BD Accuri™ C6 Plus flow cytometer, BD Biosciences FACSCelesta™ flow cytometer, BD Biosciences FACSLyric™ flow cytometer, BD Biosciences FACSVerse™ flow cytometer, BD Biosciences FACSymphony™ flow cytometer, BD Biosciences LSRFortessa™ flow cytometer, BD Biosciences LSRFortessa™ X-20 flow cytometer, BD Biosciences FACSPresto™ flow cytometer, BD Biosciences FACSVia™ flow cytometer and BD Biosciences FACSCalibur™ cell sorter, a BD Biosciences FACSCount™ cell sorter, BD Biosciences FACSLyric™ cell sorter, BD Biosciences Via™ cell sorter, BD Biosciences Influx™ cell sorter, BD Biosciences Jazz™ cell sorter, BD Biosciences Aria™ cell sorter, BD Biosciences FACSAria™ II cell sorter, BD Biosciences FACSAria™ III cell sorter, BD Biosciences FACSAria™ Fusion cell sorter and BD Biosciences FACSMelody™ cell sorter, BD Biosciences FACSymphony™ S6 cell sorter, BD Biosciences FACSDiscover™ cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos.

9,423,353; 9,784,661 and 10,006,852 and U.S. Patent Publication Nos. 2017/0133857 and 2017/0350803. In some embodiments where the flow cytometer is a particle sorter, the particle sorter is an image enabled particle sorter. Image enabled particle sorters are described in U.S. Provisional Patent Application Nos. 63/431,803 and 63/465,057.

In select cases, the flow cytometer of the disclosure is configured to operate in a plurality of operating modes. For example, in some cases, the subject flow cytometers are configured to operate in 2 or more operating modes, such as 3 or more operating modes, such as 3 or more operating modes, such as 4 or more operating modes, such as 5 or more operating modes, such as 6 or more operating modes, such as 7 or more operating modes, such as 8 or more operating modes, such as 9 or more operating modes, and including 10 or more operating modes. In some instances, the operating modes of the plurality differ with respect to flow stream velocity. In an embodiment, the flow cytometer is configured to operate in at least (a) an imaging mode wherein the flow cytometer is configured to provide the particles in the flow stream to the flow cell at a first velocity, and (b) a non-imaging mode wherein the flow cytometer is configured to provide the particles in the flow stream to the flow cell at a second velocity that is greater than the first velocity. In other words, the flow cytometer may be configured to operate in either the imaging mode or non-imaging mode at a given time, and may be configured to switch between these modes when desired. In some cases, the first velocity ranges from 0.5 m/s to 1.5 m/s, such as 0.7 m/s to 1.3 m/s, and including 0.9 m/s to 1.1 m/s. In certain cases, the first velocity is or approximates 1 m/s. In addition, the second velocity ranges in some embodiments from 3 m/s to 8 m/s, such as 4 m/s to 7 m/s, and including 5 m/s to 6 m/s. In some cases, the second velocity is or approximates 3.3 m/s. In other embodiments, the second velocity is or approximates 5.5 m/s. In embodiments, the flow cytometer is configured to operate at a plurality of imaging modes and/or non-imaging modes where each mode of the plurality is characterized by a different flow rate. In embodiments, the flow cells having optimized geometries described herein permit a single instrument to switch between different operating modes (e.g., imaging and non-imaging modes) while maintaining high performance.

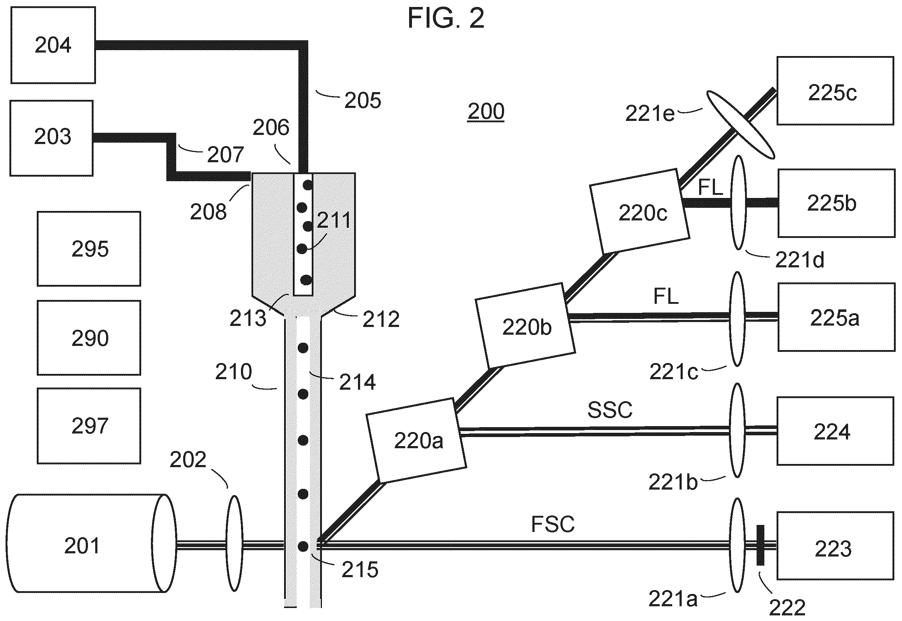

FIG. 2 shows a system 200 for flow cytometry in accordance with an illustrative embodiment of the present disclosure. System 200 includes a laser 201 configured to irradiate particles 211 in flow stream 214 at interrogation point 215 within flow cell 210. While in the example of FIG. 2, shows a single laser, it is understood that multiple lasers could also be used. The laser beam from laser 201 is directed to focusing lens 202 which focuses the beams onto the portion of a fluid stream where particles of a sample are located, within the flow cell 210. The flow cell is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019. In some embodiments, systems for sorting components of a sample include a particle sorting module having deflection plates, such as described in U.S. Patent Publication No. 2017/0299493, filed on March 28, 2017.

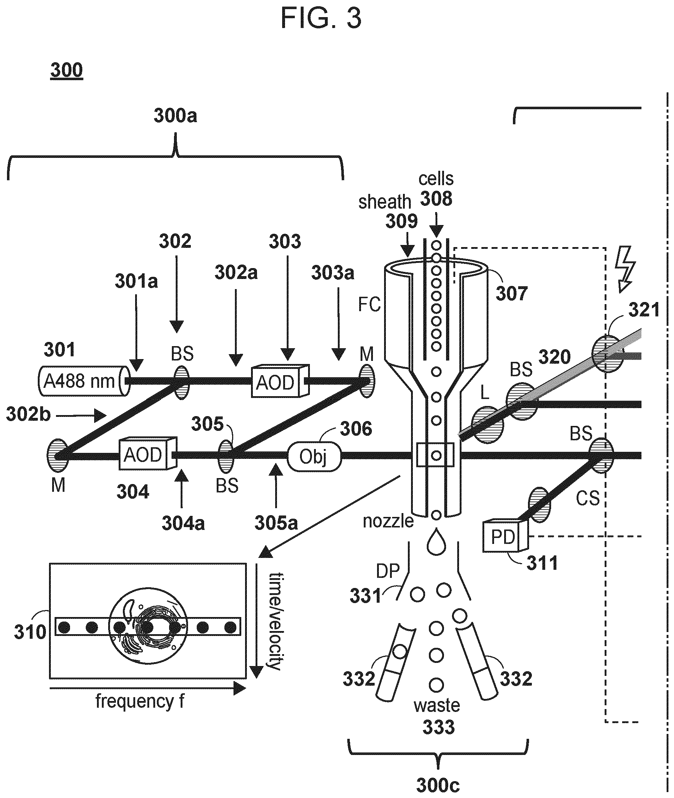

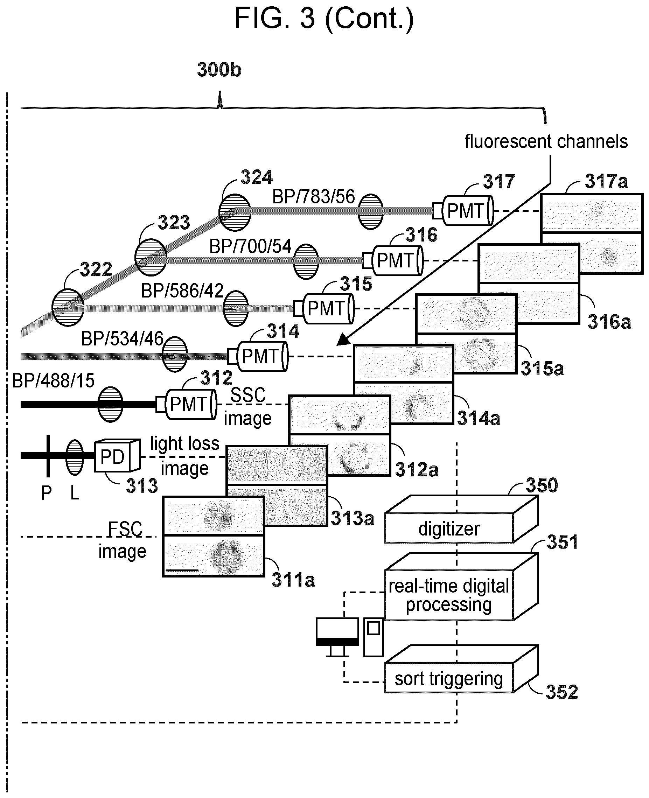

In certain embodiments, systems are fluorescence imaging using radiofrequency tagged emission image-enabled particle sorter, such as depicted in **FIG. 3.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency $f_{1-n}$.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017. In certain embodiments, sorting component 300c includes a sort decision module having a plurality of sort decision units, such as those described in U.S. Patent Publication No. 2020/0256781.

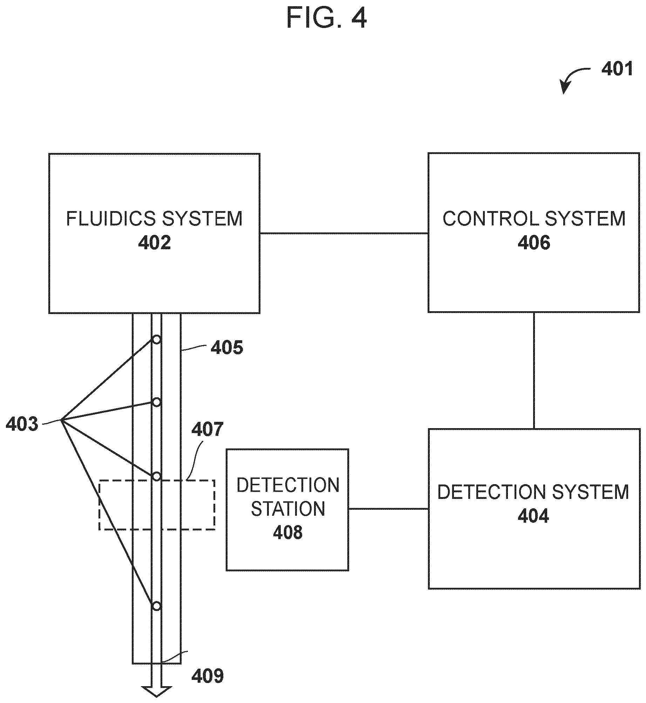

In some embodiments, systems are particle analyzers where the particle analysis system 401 (**FIG. 4**) can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

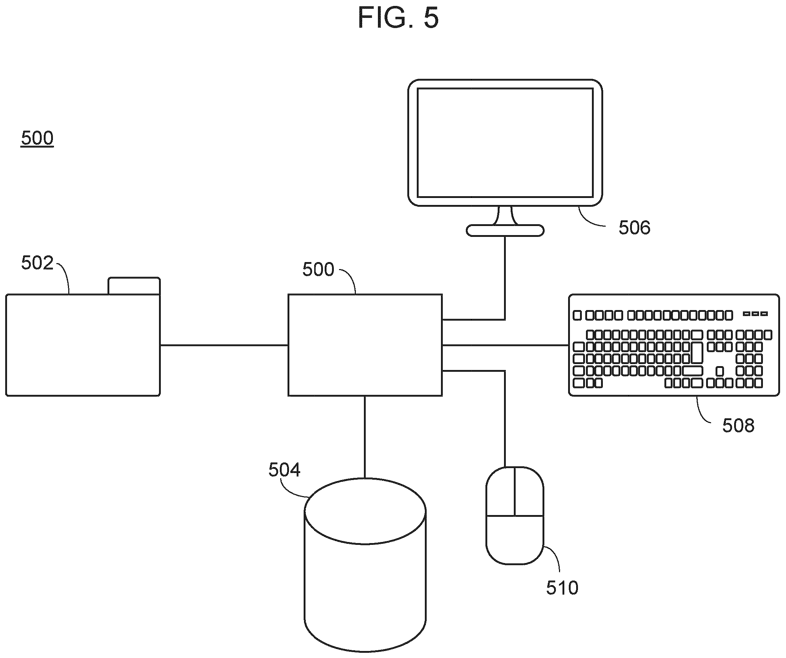

**FIG. 5** shows a functional block diagram for one example of a particle analyzer control system, such as an analytics controller 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

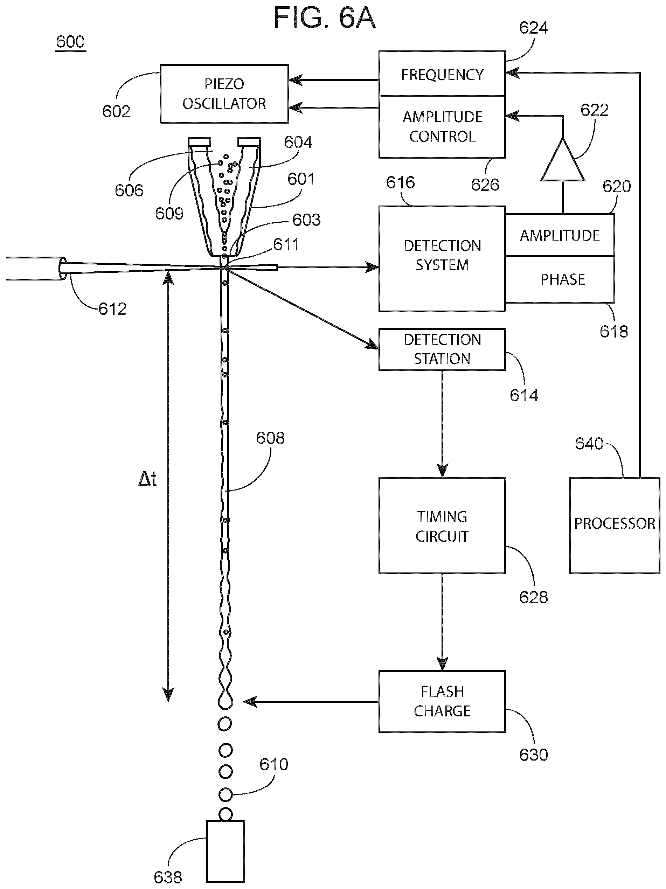

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay ($\Delta t$), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

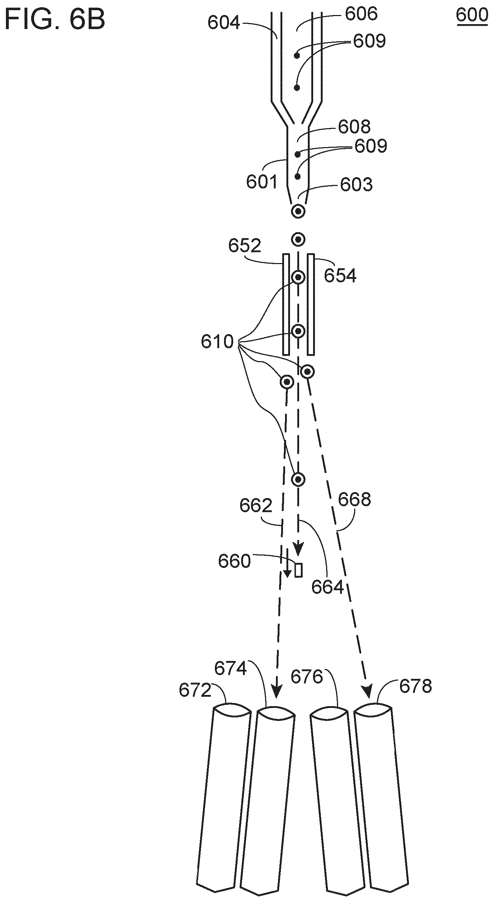

**FIG. 6B** is a schematic drawing of a particle sorter system, in accordance with one embodiment presented herein. The particle sorter system 600 shown in **FIG. 6B,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria™ line of flow cytometers commercially provided by Becton, Dickinson and Company (Franklin Lakes, NJ).

## METHODS

Aspects of the disclosure also include methods. Methods of interest include introducing a sample fluid into a flow cytometer having a flow cell of the present disclosure, and irradiating the particles in the flow stream to analyze the sample fluid. As discussed above, the subject flow cytometers include a flow cell comprising a cuvette configured to transport particles in a flow stream, the cuvette having a flow channel with a rectangular cross-section and an aspect ratio ranging from 1.0 to 1.4, a light source configured to irradiate the particles in the flow stream at an interrogation point within the flow cell, and a detector configured to collect light emitted by the irradiated particles.

In some embodiments, methods of the disclosure include operating in (a) an imaging mode wherein the flow cytometer is configured to provide the particles in the flow stream to the flow cell at a first velocity, and (b) a non-imaging mode wherein the flow cytometer is configured to provide the particles in the flow stream to the flow cell at a second velocity that is greater than the first velocity. Methods may include operating in either the imaging mode or non-imaging mode, as well as switching between these modes.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T-cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

Aspects of the disclosure additionally include methods of assembling a flow cytometer. Methods of the disclosure include positioning a flow cell of the disclosure into a flow cytometer. As discussed above, flow cells of the disclosure include a cuvette configured to transport particles in a flow stream and have a flow channel with a rectangular cross-section and an aspect ratio ranging from 1.0 to 1.4. Methods according to some embodiments also include fluidically connecting to the flow cell a sample fluid line configured to provide the particles to the flow cell. In certain cases, methods include positioning a collection lens in optical communication with the flow cell and the detector. Methods according to some embodiments include positioning an objective lens in optical communication with the light source and the flow cell.

## COMPUTER-CONTROLLED SYSTEMS

Aspects of the disclosure additionally include computer-controlled systems, where the systems include one or more computers for complete automation or partial automation. In some embodiments, systems include a computer having a non-transitory computer readable storage medium with a computer program stored thereon, where the computer program when loaded on the computer includes instructions for performing methods of the disclosure. For example, the computer may be configured to switch between operating modes of the flow cytometer, e.g., between (a) an imaging mode wherein the flow cytometer is configured to provide the particles in the flow stream to the flow cell at a first velocity, and (b) a non-imaging mode wherein the flow cytometer is configured to provide the particles in the flow stream to the flow cell at a second velocity that is greater than the first velocity.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth® communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth® communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth® RF protocol, or an IrDA infrared protocol. The server device may be another portable device, such as a smart phone, Personal Digital Assistant (PDA) or notebook computer; or a larger device such as a desktop computer, appliance, etc.

In some embodiments, the server device has a display, such as a liquid crystal display (LCD), as well as an input device, such as buttons, a keyboard, mouse or touchscreen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows® NT®, Windows® XP, Windows® 7, Windows® 8, Windows® 10, iOS®, macOS®, Linux®, Ubuntu®, Fedora®, OS/400®, i5/OS®, IBM i®, Android™, SGI IRIX®, Oracle Solaris® and others.

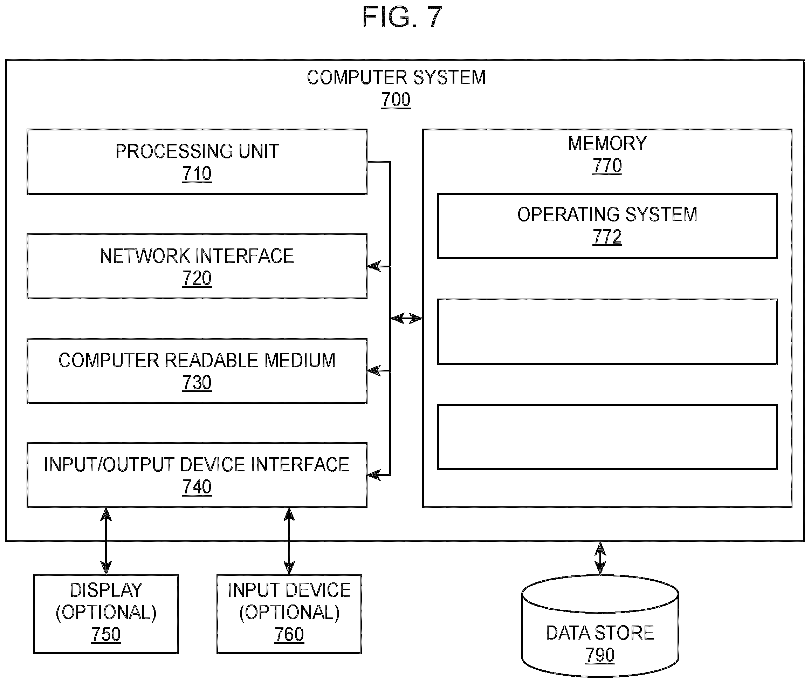

FIG. 7 depicts a general architecture of an example computing device 700 according to certain embodiments. The general architecture of the computing device 700 depicted in FIG. 7 includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo®) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

## KITS

Aspects of the disclosure also include kits. Kits of interest include one or more flow cells having optimized geometry. In one embodiment, kits include a single flow cell. In other embodiments, kits include a plurality of flow cells, e.g., 1 or more flow cells, such as 2 or more flow cells, such as 3 or more flow cells, such as 4 or more flow cells, and 5 or more flow cells. Kits according to some embodiments also include one or more collection lenses and/or one or more objective lenses for use with the subject flow cells.

In addition to the above components, the subject kits may further include (in some embodiments) instructions, e.g., for installing the flow cell of the disclosure into a flow cytometer. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

## UTILITY

The subject flow cells, flow cytometers and methods find use in a variety of applications where it is desirable to analyze components in a sample in a fluid medium. The present disclosure particularly finds use to improve core stream quality in fluidics systems. The present disclosure may be employed, e.g., where it is desirable to operate the same flow cytometer (i.e., having the same flow cell) across different operating modes (e.g., an imaging mode and a non-imaging mode).

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

The following is presented by way of example and not by way of limitation:

## EXPERIMENTAL

Cuvette channel geometries that best support a flow cytometer platform were sought. For possible analyzer cuvette geometries, a trade space analysis was performed by imposing design constraints from imaging, optical collection, and fluidics considerations. Cuvette channel lengths of 50-500 $\mu$m in Y and Z examined, and the aspect ratio was defined as Y/Z. Core velocities of 1 m/s, 3.3 m/s, and 5.5 m/s were tested. A Zemax model was used to calculate collection efficiency and (flat top) optical CV. Imaging constraints included a 1 m/s flow velocity, a desire to minimize the aspect ratio, and an imaging sport size of 60 $\mu$m, so the maximum core constraint was set to 50 $\mu$m. Optical constraints included a desire to maximize aspect ratio for collection efficiency, and CV increases for elliptical core stream greater than 30 $\mu$m x 40 $\mu$m (Z x Y) due to clipping of fiber collection. Fluid constraints included a sheath flowrate > 1 ml/min for sample/sheath ratio > 0.1, a sheath flowrate < 20 ml/min as to not exceed historic sheath consumption, and a pressure drop < 6 psi to accommodate small, low cost pumps. Ideally, imaging analyzers can operate at higher velocities as well as at higher throughput modes.

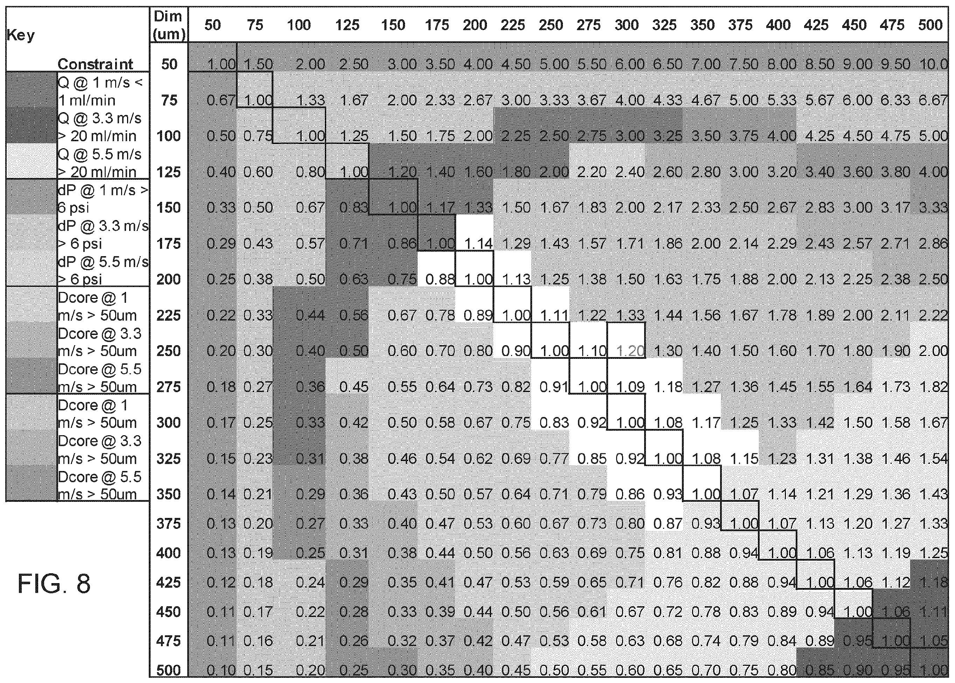

Fluid and core stream constraints were applied to a matrix of Y and Z channel lengths, with constraint conflicts colored in. The result is shown in **FIG. 8.** The uncolored region in the center represented the only geometries which satisfies all constraints. The maximum aspect ratio geometry which satisfies all constraints for imaging was 250 $\mu$m x 300 $\mu$m. This yields a core stream diameter of 35 $\mu$m x 50 $\mu$m at 1 m/s velocity.

Collection efficiency of inner bore alone was modeled using Zemax. Results are shown below in **Table 1:**

### Table 1

| Inner Bore Dimensions ($\mu$m) | CE (%) |
|---|---|
| 178 x 430 | 30 |
| 250 x 250 | 21 |
| 450 x 450 | 20 |
| 250 x 300 | 22 |

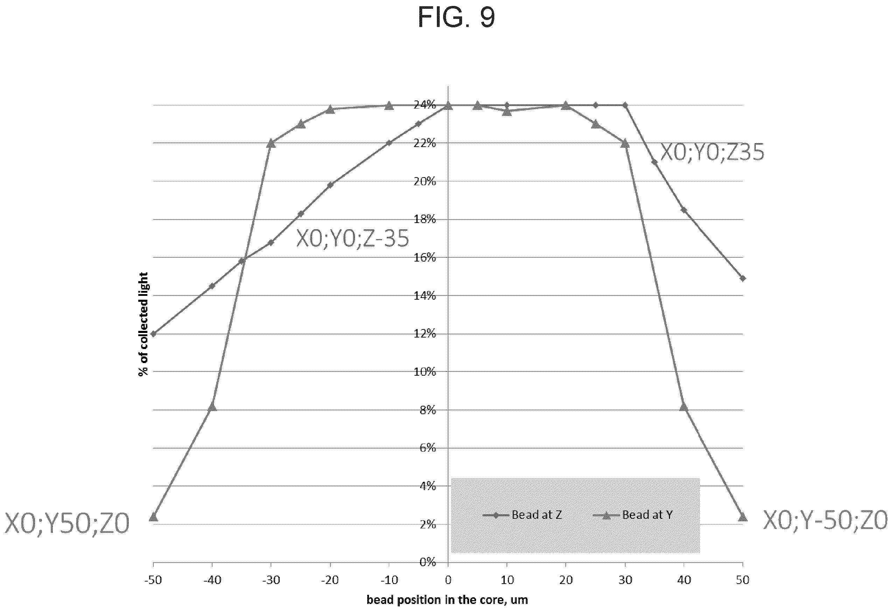

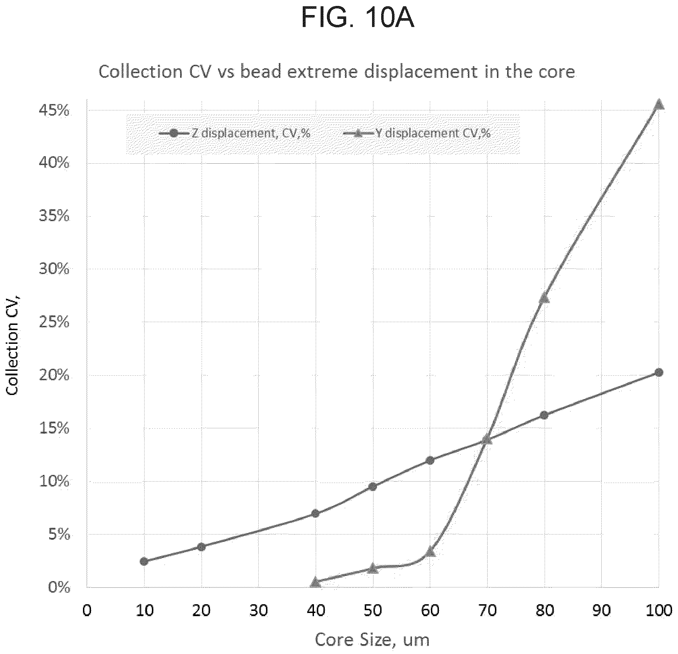

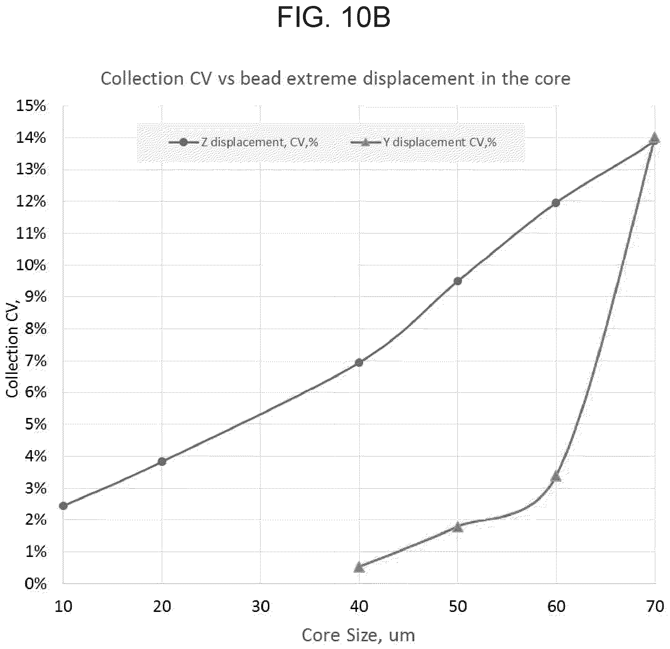

Maximum core stream size was added to model collection for a flat top beam for the proposed 250 x 300 geometry. Modeling variation in collection efficiency with bead displacement within cuvette's bore 250 $\mu$m x 300 $\mu$m and an objective lens is shown in **FIG. 9.** Uneven response to Z displacement suggests one would want to offset Z location from model's nominal by 15 $\mu$m. CV calculated from collection efficiency results is shown in **FIG. 10A-10B.**

Notwithstanding the appended claims, the invention may also be defined by the following clauses:

1. A flow cytometer comprising:

a flow cell comprising a cuvette configured to transport particles in a flow stream, the cuvette having a flow channel with a rectangular cross-section and an aspect ratio ranging from 1.0 to 1.4;
a light source configured to irradiate the particles in the flow stream at an interrogation point within the flow cell; and
a detector configured to collect light emitted by the irradiated particles.

2. The flow cytometer according to Clause 1, wherein the aspect ratio ranges from 1.1 to 1.3.
3. The flow cytometer according to Clause 2, wherein the aspect ratio is about 1.2.
4. The flow cytometer according to any one of the preceding clauses, wherein the rectangular cross-section of the flow channel has a length ranging from 275 $\mu$m to 325 $\mu$m.

5. The flow cytometer according to Clause 4, wherein the length of the rectangular cross-section of the flow channel ranges from 290 μm to 310 μm.

6. The flow cytometer according to Clause 5, wherein the length of the rectangular cross-section of the flow channel ranges from 295 μm to 305 μm.

7. The flow cytometer according to any one of the preceding clauses, wherein the rectangular cross-section of the flow channel has a width ranging from 225 μm to 275 μm.

8. The flow cytometer according to Clause 7, wherein the width of the rectangular cross-section of the flow channel ranges from 240 μm to 260 μm.

9. The flow cytometer according to Clause 8, wherein the width of the rectangular cross-section of the flow channel ranges from 245 μm to 255 μm.

10. The flow cytometer according to any one of the preceding clauses, wherein the flow cytometer is configured as an imaging flow cytometer.

11. The flow cytometer according to Clause 10, wherein the light source comprises a light beam generator component configured to generate at least a first beam of frequency shifted light and a second beam of frequency shifted light.

12. The flow cytometer according to Clause 11, further comprising an acousto-optic deflector (AOD).

13. The flow cytometer according to any one of Clauses 10 to 12, further comprising a sample fluid line configured to provide the particles to the flow cell.

14. The flow cytometer according to Clause 13, wherein the flow cytometer is configured to provide the particles in the flow stream at a velocity ranging from 0.1 m/s to 10 m/s.

15. The flow cytometer according to Clause 13 or 14, configured to operate in:

(a) an imaging mode wherein the flow cytometer is configured to provide the particles in the flow stream to the flow cell at a first velocity; and
(b) a non-imaging mode wherein the flow cytometer is configured to provide the particles in the flow stream to the flow cell at a second velocity that is greater than the first velocity.

16. The flow cytometer according to Clause 15, wherein the first velocity ranges from 0.5 m/s to 1.5 m/s.

17. The flow cytometer according to Clause 16, wherein the first velocity ranges from 0.7 m/s to 1.3 m/s.

18. The flow cytometer according to Clause 17, wherein the first velocity ranges from 0.9 m/s to 1.1 m/s.

19. The flow cytometer according to any one of Clauses 15 to 18, wherein the second velocity ranges from 3 m/s to 8 m/s.

20. The flow cytometer according to Clause 19, wherein the second velocity ranges from 4 m/s to 7 m/s.

21. The flow cytometer according to Clause 20, wherein the second velocity ranges from 5 m/s to 6 m/s.

22. The flow cytometer according to any one of Clauses 15 to 21, wherein a ratio between the first velocity and the second velocity ranges from 1:12 to about 1:2.

23. The flow cytometer according to any one of the preceding clauses, further comprising a collection lens in optical communication with the flow cell and the detector.

24. The flow cytometer according to Clause 23, wherein the collection lens is coupled to the flow cell.

25. The flow cytometer according to Clause 23 or 24, wherein the collection lens has a numerical aperture (NA) ranging from 0.75 to 1.5.

26. The flow cytometer according to Clause 25, wherein the collection lens has a NA ranging from 0.9 to 1.4

27. The flow cytometer according to Clause 26, wherein the collection lens has a NA ranging from 1.1 to 1.3.

28. The flow cytometer according to any one of Clauses 23 or 27, wherein the collection lens has a collection angle ($\theta$) of 90 degrees to about 110 degrees.

29. The flow cytometer according to Clause 28, wherein the collection lens has a collection angle of 95 degrees to 105 degrees.

30. The flow cytometer according to Clause 29, wherein the collection lens has a collection angle of 97 degrees to 103 degrees.

31. The flow cytometer according to any one of Clauses 23 to 30, wherein a surface of the cuvette is separated from the flow channel by a distance ranging from 1.9 mm to 2.1 mm.

32. The flow cytometer according to Clause 31, wherein the surface of the cuvette is separated from the flow channel by a distance ranging from 2 mm to 2.05 mm.

33. The flow cytometer according to Clause 32, wherein the surface of the cuvette is separated from the flow channel by a distance ranging from 2.02 mm to 2.04 mm.

34. The flow cytometer according to any one of Clauses 23 to 30, further comprising an objective lens in optical communication with the light source and the flow cell.

35. The flow cytometer according to Clause 34, wherein a surface of the cuvette is separated from the flow channel by a distance ranging from 5 mm to 5.2 mm.

36. The flow cytometer according to Clause 35, wherein the surface of the cuvette is separated from the flow channel by a distance ranging from 5.05 mm to 5.1 mm.

37. The flow cytometer according to Clause 36, wherein the surface of the cuvette is separated from the flow channel by a distance ranging from 5.07 mm to 5.09 mm.

38. The flow cytometer according to any one of Clauses 31 to 37, wherein the surface of the cuvette comprises an anti-reflective coating.

39. The flow cytometer according to any one of the preceding clauses, wherein the cuvette has a height perpendicular to the rectangular cross-section of 5 mm to 9 mm.

40. The flow cytometer according to Clause 39, wherein the height of the cuvette ranges from 6 mm to 8 mm.

41. The flow cytometer according to Clause 40, wherein the height of the cuvette ranges from 7 mm to 7.2 mm.

42. The flow cytometer according to any one of the preceding clauses, wherein the cuvette has a length ranging from 8 mm to 12 mm.

43. The flow cytometer according to Clause 42, wherein the length of the cuvette ranges from 9 mm to 11 mm.

44. The flow cytometer according to Clause 43, wherein the length of the cuvette ranges from 10 mm to 10.2 mm.

45. The flow cytometer according to any one of the preceding clauses, wherein a width of the cuvette ranges from 2 mm to 6 mm.

46. The flow cytometer according to Clause 45, wherein the width of the cuvette ranges from 3 mm to 5 mm.

47. The flow cytometer according to Clause 46, wherein the width of the cuvette ranges from 4 mm to 4.1 mm.

48. The flow cytometer according to Clause 1, wherein a ratio of a width of the rectangular cross-section of the flow channel to a width of the cuvette ranges from 1:8.9 to 1:21.8.

49. The flow cytometer according to Clause 48, wherein the ratio of the width of the rectangular cross-section of the flow channel to the width of the cuvette ranges from 1:12.5 to 1:19.2.

50. The flow cytometer according to Clause 49, wherein the ratio of the width of the rectangular cross-section of the flow channel to the width of the cuvette ranges from 1:16.1 to 1:16.3.

51. The flow cytometer according to Clause 1, wherein a ratio of a width of the rectangular cross-section of the flow channel to a height perpendicular to the rectangular cross-section ranges from 1:22.2 to 1:32.7.

52. The flow cytometer according to Clause 51, wherein the ratio of the width of the rectangular cross-section of the flow channel to the height perpendicular to the rectangular cross-section ranges from 1:25 to 1:30.1.

53. The flow cytometer according to Clause 52, wherein the ratio of the width of the rectangular cross-section of the flow channel to the height perpendicular to the rectangular cross-section ranges from 1:28.2 to 1:28.6.

54. The flow cytometer according to Clause 1, wherein a ratio of a length of the rectangular cross-section of the flow channel to a length of the cuvette ranges from 1:29.1 to 1:40.

55. The flow cytometer according to Clause 54, wherein the ratio of the length of the rectangular cross-section of the flow channel to the length of the cuvette ranges from 1:31 to 1:35.6.

56. The flow cytometer according to Clause 55, wherein the ratio of the length of the rectangular cross-section of the flow channel to the length of the cuvette ranges from 1:33.4 to 1:33.9.

57. The flow cytometer according to Clause 1, wherein a ratio of a length of the rectangular cross-section of the flow channel to a height perpendicular to the rectangular cross-section ranges from 1:18.2 to 1:27.7.

58. The flow cytometer according to Clause 57, wherein the ratio of the length of the rectangular cross-section of the flow channel to the height perpendicular to the rectangular cross-section ranges from 1:20.7 to 1:25.8.

59. The flow cytometer according to Clause 58, wherein the ratio of the length of the rectangular cross-section of the flow channel to the height perpendicular to the rectangular cross-section ranges from 1:23.6 to 1:23.7.

60. The flow cytometer according to any one of the preceding clauses, wherein the cuvette is comprised of fused silica.

61. The flow cytometer according to any one of the preceding clauses, wherein the flow cell has a collection efficiency of 20% to 40%.

62. The flow cytometer according to Clause 61, wherein the flow cell has a collection efficiency of 21% to 30%.

63. The flow cytometer according to Clause 62, wherein the flow cell has a collection efficiency of 23% to 25%.

64. The flow cytometer according to any one of the preceding clauses, wherein the rectangular cross-section of the flow channel is symmetric within a width, length, or both, of the cuvette.

65. The flow cytometer according to any one of the preceding clauses, wherein the flow channel extends through a height of the cuvette.

66. A method of analyzing a sample fluid, the method comprising:

(a) introducing a sample fluid into a flow cytometer comprising:

a flow cell comprising a cuvette configured to transport particles in a flow stream, the cuvette having a flow channel with a rectangular cross-section and an aspect ratio ranging from 1.0 to 1.4;

a light source configured to irradiate the particles in the flow stream at an interrogation point within the flow cell; and

a detector configured to collect light emitted by the irradiated particles; and

(b) irradiating the particles in the flow stream to analyze the sample fluid.

67. The method according to Clause 66, wherein the aspect ratio ranges from 1.1 to 1.3.

68. The method according to Clause 67, wherein the aspect ratio is about 1.2.

69. The method according to any one of Clauses 66 to 68, wherein the rectangular cross-section of the flow channel has a length ranging from 275 μm to 325 μm.

70. The method according to Clause 69, wherein the length of the rectangular cross-section of the flow channel ranges from 290 μm to 310 μm.

71. The method according to Clause 70, wherein the length of the rectangular cross-section of the flow channel ranges from 295 μm to 305 μm.

72. The method according to any one of Clauses 66 to 71, wherein the rectangular cross-section of the flow channel has a width ranging from 225 μm to 275 μm.

73. The method according to Clause 72, wherein the width of the rectangular cross-section of the flow channel ranges from 240 μm to 260 μm.

74. The method according to Clause 73, wherein the width of the rectangular cross-section of the flow channel ranges from 245 μm to 255 μm.

75. The method according to any one of Clauses 66 to 74, wherein the flow cytometer is configured as an imaging flow cytometer.

76. The method according to Clause 75, wherein the light source comprises a light beam generator component configured to generate at least a first beam of frequency shifted light and a second beam of frequency shifted light.

77. The method according to Clause 76, wherein the flow cytometer further comprises an acousto-optic deflector (AOD).

78. The method according to any one of Clauses 75 to 77, wherein the flow cytometer further comprises a sample fluid line configured to provide the particles to the flow cell.

79. The method according to Clause 78, wherein the flow cytometer is configured to provide the particles in the flow stream at a velocity ranging from 0.1 m/s to 10 m/s.

80. The method according to Clause 78 or 79, further comprising operating in:

(a) an imaging mode wherein the flow cytometer is configured to provide the particles in the flow stream to the flow cell at a first velocity; and

(b) a non-imaging mode wherein the flow cytometer is configured to provide the particles in the flow stream to the flow cell at a second velocity that is greater than the first velocity.

81. The method according to Clause 80, wherein the first velocity ranges from 0.5 m/s to 1.5 m/s.

82. The method according to Clause 81, wherein the first velocity ranges from 0.7 m/s to 1.3 m/s.

83. The method according to Clause 82, wherein the first velocity ranges from 0.9 m/s to 1.1 m/s.

84. The method according to any one of Clauses 80 to 83, wherein the second velocity ranges from 3 m/s to 8 m/s.

85. The method according to Clause 84, wherein the second velocity ranges from 4 m/s to 7 m/s.

86. The method according to Clause 85, wherein the second velocity ranges from 5 m/s to 6 m/s.

87. The method according to any one of Clauses 80 to 86, wherein a ratio between the first velocity and the second velocity ranges from 1:12 to about 1:2.

88. The method according to any one of Clauses 66 to 87, wherein the flow cytometer further comprises a collection lens in optical communication with the flow cell and the detector.

89. The method according to Clause 88, wherein the collection lens is coupled to the flow cell.

90. The method according to Clause 88 or 89, wherein the collection lens has a numerical aperture (NA) ranging from 0.75 to 1.5.

91. The method according to Clause 90, wherein the collection lens has a NA ranging from 0.9 to 1.4.

92. The method according to Clause 91, wherein the collection lens has a NA ranging from 1.1 to 1.3.

93. The method according to any one of Clauses 88 to 92, wherein the collection lens has a collection angle ($\theta$) of 90 degrees to about 110 degrees.

94. The method according to Clause 93, wherein the collection lens has a collection angle of 95 degrees to 105 degrees.

95. The method according to Clause 94, wherein the collection lens has a collection angle of 97 degrees to 103 degrees.

96. The method according to any one of Clauses 88 to 95, wherein a surface of the cuvette is separated from the flow channel by a distance ranging from 1.9 mm to 2.1 mm.

97. The method according to Clause 96, wherein the surface of the cuvette is separated from the flow channel by a distance ranging from 2 mm to 2.05 mm.

98. The method according to Clause 97, wherein the surface of the cuvette is separated from the flow channel by a distance ranging from 2.02 mm to 2.04 mm.

99. The method according to any one of Clauses 66 to 98, wherein the flow cytometer further comprises an objective lens in optical communication with the light source and the flow cell.

100. The method according to Clause 99, wherein a surface of the cuvette is separated from the flow channel by a distance ranging from 5 mm to 5.2 mm.

101. The method according to Clause 100, wherein the surface of the cuvette is separated from the flow channel by a distance ranging from 5.05 mm to 5.1 mm.

102. The method according to Clause 101, wherein the surface of the cuvette is separated from the flow channel by a distance ranging from 5.07 mm to 5.09 mm.

103. The method according to any one of Clauses 96 to 102, wherein the cuvette further comprises an anti-reflective coating on the surface.

104. The method according to any one of Clauses 66 to 103, wherein the cuvette has a height perpendicular to the rectangular cross-section of 5 mm to 9 mm.

105. The method according to Clause 104, wherein the height of the cuvette ranges from 6 mm to 8 mm.

106. The method according to Clause 105, wherein the height of the cuvette ranges from 7 mm to 7.2 mm.

107. The method according to any one of Clauses 66 to 106, wherein the cuvette has a length ranging from 8 mm to 12 mm.

108. The method according to Clause 107, wherein the length of the cuvette ranges from 9 mm to 11 mm.

109. The method according to Clause 108, wherein the length of the cuvette ranges from 10 mm to 10.2 mm.

110. The method according to any one of Clauses 66 to 109, wherein a width of the cuvette ranges from 2 mm to 6 mm.

111. The method according to Clause 110, wherein the width of the cuvette ranges from 3 mm to 5 mm.

112. The method according to Clause 111, wherein the width of the cuvette ranges from 4 mm to 4.1 mm.

113. The method according to Clause 66, wherein a ratio of a width of the rectangular cross-section of the flow channel to a width of the cuvette ranges from 1:8.9 to 1:21.8.

114. The method according to Clause 113, wherein the ratio of the width of the rectangular cross-section of the flow channel to the width of the cuvette ranges from 1:12.5 to 1:19.2.

115. The method according to Clause 114, wherein the ratio of the width of the rectangular cross-section of the flow channel to the width of the cuvette ranges from 1:16.1 to 1:16.3.

116. The method according to Clause 66, wherein a ratio of a width of the rectangular cross-section of the flow channel to a height perpendicular to the rectangular cross-section ranges from 1:22.2 to 1:32.7.

117. The method according to Clause 116, wherein the ratio of the width of the rectangular cross-section of the flow channel to the height perpendicular to the rectangular cross-section ranges from 1:25 to 1:30.1.

118. The method according to Clause 117, wherein the ratio of the width of the rectangular cross-section of the flow channel to the height perpendicular to the rectangular cross-section ranges from 1:28.2 to 1:28.6.

119. The method according to Clause 66, wherein a ratio of a length of the rectangular cross-section of the flow channel to a length of the cuvette ranges from 1:29.1 to 1:40.

120. The method according to Clause 119, wherein the ratio of the length of the rectangular cross-section of the flow channel to the length of the cuvette ranges from 1:31 to 1:35.6.

121. The method according to Clause 120, wherein the ratio of the length of the rectangular cross-section of the flow channel to the length of the cuvette ranges from 1:33.4 to 1:33.9.

122. The method according to Clause 66, wherein a ratio of a length of the rectangular cross-section of the flow channel to a height perpendicular to the rectangular cross-section ranges from 1:18.2 to 1:27.7.

123. The method according to Clause 122, wherein the ratio of the length of the rectangular cross-section of the flow channel to the height perpendicular to the rectangular cross-section ranges from 1:20.7 to 1:25.8.

124. The method according to Clause 123, wherein the ratio of the length of the rectangular cross-section of the flow channel to the height perpendicular to the rectangular cross-section ranges from 1:23.6 to 1:23.7.

125. The method according to any one of Clauses 66 to 124, wherein the cuvette is comprised of fused silica.

126. The method according to any one of Clauses 66 to 125, wherein the flow cell has a collection efficiency of 20% to 40%.

127. The method according to Clause 126, wherein the flow cell has a collection efficiency of 21% to 30%.

128. The method according to Clause 127, wherein the flow cell has a collection efficiency of 23% to 25%.

129. The method according to any one of Clauses 66 to 128, wherein the rectangular cross-section of the flow channel is symmetric within a width, length, or both, of the cuvette.

130. The method according to any one of Clauses 66 to 129, wherein the flow channel extends through a height of the cuvette.

131. A flow cell comprising a cuvette configured to transport particles in a flow stream, the cuvette having a flow channel with a rectangular cross-section and an aspect ratio ranging from 1.0 to 1.4.

132. The flow cell according to Clause 131, wherein the aspect ratio ranges from 1.1 to 1.3.

133. The flow cell according to Clause 132, wherein the aspect ratio is about 1.2.

134. The flow cell according to any one of Clauses 131 to 133, wherein the rectangular cross-section of the flow channel has a length ranging from 275 μm to 325 μm

135. The flow cell according to Clause 134, wherein the length of the rectangular cross-section of the flow channel ranges from 290 μm to 310 μm.

136. The flow cell according to Clause 135, wherein the length of the rectangular cross-section of the flow channel ranges from 295 μm to 305 μm.

137. The flow cell according to any one of Clauses 131 to 136, wherein the rectangular cross-section of the flow channel has a width ranging from 225 μm to 275 μm.

138. The flow cell according to Clause 137, wherein the width of the rectangular cross-section of the flow channel ranges from 240 μm to 260 μm.

139. The flow cell according to Clause 138, wherein the width of the rectangular cross-section of the flow channel ranges from 245 μm to 255 μm.

140. The flow cell according to any one of Clauses 131 to 139, wherein a surface of the cuvette is separated from the flow channel by a distance ranging from 1.9 mm to 2.1 mm.

141. The flow cell according to Clause 140, wherein the surface of the cuvette is separated from the flow channel by a distance ranging from 2 mm to 2.05 mm.

142. The flow cell according to Clause 141, wherein the surface of the cuvette is separated from the flow channel by a distance ranging from 2.02 mm to 2.04 mm.

143. The flow cell according to any one of Clauses 131 to 139, wherein a surface of the cuvette is separated from the flow channel by a distance ranging from 5 mm to 5.2 mm.

144. The flow cell according to Clause 143, wherein the surface of the cuvette is separated from the flow channel by a distance ranging from 5.05 mm to 5.1 mm.

145. The flow cell according to Clause 144, wherein the surface of the cuvette is separated from the flow channel by a distance ranging from 5.07 mm to 5.09 mm.

146. The flow cell according to any one of Clauses 140 to 145, wherein the surface of the cuvette comprises an anti-reflective coating.

147. The flow cell according to any one of Clauses 131 to 146, wherein the cuvette has a height perpendicular to the rectangular cross-section of 5 mm to 9 mm.

148. The flow cell according to Clause 147, wherein the height of the cuvette ranges from 6 mm to 8 mm.

149. The flow cell according to Clause 148, wherein the height of the cuvette ranges from 7 mm to 7.2 mm.

150. The flow cell according to any one of Clauses 131 to 149, wherein the cuvette has a length ranging from 8 mm to 12 mm.

151. The flow cell according to Clause 150, wherein the length of the cuvette ranges from 9 mm to 11 mm.

152. The flow cell according to Clause 151, wherein the length of the cuvette ranges from 10 mm to 10.2 mm.

153. The flow cell according to any one of Clauses 131 to 152, wherein a width of the cuvette ranges from 2 mm to 6 mm.

154. The flow cell according to Clause 153, wherein the width of the cuvette ranges from 3 mm to 5 mm.

155. The flow cell according to Clause 154, wherein the width of the cuvette ranges from 4 mm to 4.1 mm.

156. The flow cell according to Clause 131, wherein a ratio of a width of the rectangular cross-section of the flow channel to a width of the cuvette ranges from 1:8.9 to 1:21.8.

157. The flow cell according to Clause 156, wherein the ratio of the width of the rectangular cross-section of the flow channel to the width of the cuvette ranges from 1:12.5 to 1:19.2.

158. The flow cell according to Clause 157, wherein the ratio of the width of the rectangular cross-section of the flow channel to the width of the cuvette ranges from 1:16.1 to 1:16.3.

159. The flow cell according to Clause 131, wherein a ratio of a width of the rectangular cross-section of the flow channel to a height perpendicular to the rectangular cross-section ranges from 1:22.2 to 1:32.7.

160. The flow cell according to Clause 159, wherein the ratio of the width of the rectangular cross-section of the flow channel to the height perpendicular to the rectangular cross-section ranges from 1:25 to 1:30.1.

161. The flow cell according to Clause 160, wherein the ratio of the width of the rectangular cross-section of the flow channel to the height perpendicular to the rectangular cross-section ranges from 1:28.2 to 1:28.6.

162. The flow cell according to Clause 131, wherein a ratio of a length of the rectangular cross-section of the flow channel to a length of the cuvette ranges from 1:29.1 to 1:40.

163. The flow cell according to Clause 162, wherein the ratio of the length of the rectangular cross-section of the flow channel to the length of the cuvette ranges from 1:31 to 1:35.6.

164. The flow cell according to Clause 163, wherein the ratio of the length of the rectangular cross-section of the flow channel to the length of the cuvette ranges from 1:33.4 to 1:33.9.

165. The flow cell according to Clause 131, wherein a ratio of a length of the rectangular cross-section of the flow channel to a height perpendicular to the rectangular cross-section ranges from 1:18.2 to 1:27.7.

166. The flow cell according to Clause 165, wherein the ratio of the length of the rectangular cross-section of the flow channel to the height perpendicular to the rectangular cross-section ranges from 1:20.7 to 1:25.8.

167. The flow cell according to Clause 166, wherein the ratio of the length of the rectangular cross-section of the flow channel to the height perpendicular to the rectangular cross-section ranges from 1:23.6 to 1:23.7.

168. The flow cell according to any one of Clauses 131 to 167, wherein the cuvette is comprised of fused silica.

169. The flow cell according to any one of Clauses 131 to 168, wherein the flow cell has a collection efficiency of 20% to 40%.

170. The flow cell according to Clause 169, wherein the flow cell has a collection efficiency of 21% to 30%.

171. The flow cell according to Clause 170, wherein the flow cell has a collection efficiency of 23% to 25%.

172. The flow cell according to any one of Clauses 131 to 171, wherein the rectangular cross-section of the flow channel is symmetric within a width, length, or both, of the cuvette.

173. The flow cell according to any one of Clauses 131 to 172, wherein the flow channel extends through a height of the cuvette.

174. A method of assembling a flow cytometer, the method comprising positioning a flow cell comprising a cuvette configured to transport particles in a flow stream into a flow cytometer comprising:

a light source configured to irradiate the particles in the flow stream at an interrogation point within the flow cell; and
a detector configured to collect light emitted by the irradiated particles,
wherein the cuvette has a flow channel with a rectangular cross-section and an aspect ratio ranging from 1.0 to 1.4.

175. The method according to Clause 174, wherein the aspect ratio ranges from 1.1 to 1.3.

176. The method according to Clause 175, wherein the aspect ratio is about 1.2.

177. The method according to any one of Clauses 174 to 176, wherein the rectangular cross-section of the flow channel has a length ranging from 275 $\mu$m to 325 $\mu$m

178. The method according to Clause 177, wherein the length of the rectangular cross-section of the flow channel ranges from 290 $\mu$m to 310 $\mu$m.

179. The method according to Clause 178, wherein the length of the rectangular cross-section of the flow channel ranges from 295 $\mu$m to 305 $\mu$m.

180. The method according to any one of Clauses 174 to 179, wherein the rectangular cross-section of the flow channel has a width ranging from 225 $\mu$m to 275 $\mu$m.

181. The method according to Clause 180, wherein the width of the rectangular cross-section of the flow channel ranges from 240 $\mu$m to 260 $\mu$m.

182. The method according to Clause 181, wherein the width of the rectangular cross-section of the flow channel ranges from 245 $\mu$m to 255 $\mu$m.

183. The method according to any one of Clauses 174 to 182, wherein the flow cytometer is configured as an imaging flow cytometer.

184. The method according to Clause 183, wherein the light source comprises a light beam generator component configured to generate at least a first beam of frequency shifted light and a second beam of frequency shifted light.

185. The method according to Clause 184, further comprising an acousto-optic deflector (AOD).

186. The method according to any one of Clauses 183 to 185, further comprising fluidically connecting to the flow cell a sample fluid line configured to provide the particles to the flow cell.

187. The method according to Clause 186, wherein the flow cytometer is configured to provide the particles in the flow stream at a velocity ranging from 0.1 m/s to 10 m/s.

188. The method according to Clause 186 or 187, wherein the flow cytometer is configured to operate in:

(a) an imaging mode wherein the flow cytometer is configured to provide the particles in the flow stream to the flow cell at a first velocity; and
(b) a non-imaging mode wherein the flow cytometer is configured to provide the particles in the flow stream to the flow cell at a second velocity that is greater than the first velocity.

189. The method according to Clause 188, wherein the first velocity ranges from 0.5 m/s to 1.5 m/s.

190. The method according to Clause 189, wherein the first velocity ranges from 0.7 m/s to 1.3 m/s.

191. The method according to Clause 190, wherein the first velocity ranges from 0.9 m/s to 1.1 m/s.

192. The method according to any one of Clauses 188 to 191, wherein the second velocity ranges from 3 m/s to 8 m/s.

193. The method according to Clause 192, wherein the second velocity ranges from 4 m/s to 7 m/s.

194. The method according to Clause 193, wherein the second velocity ranges from 5 m/s to 6 m/s.

195. The method according to any one of Clauses 188 to 194, wherein a ratio between the first velocity and the second velocity ranges from 1:12 to about 1:2.

196. The method according to any one of Clauses 174 to 195, further comprising positioning a collection lens in optical communication with the flow cell and the detector.

197. The method according to Clause 196, further comprising coupling the collection lens to the cuvette.

198. The method according to Clause 196 or 197, wherein the collection lens has a numerical aperture (NA) ranging from 0.75 to 1.5.

199. The method according to Clause 198, wherein the collection lens has a NA ranging from 0.9 to 1.4

200. The method according to Clause 199, wherein the collection lens has a NA ranging from 1.1 to 1.3.

201. The method according to any one of Clauses 196 to 200, wherein the collection lens has a collection angle ($\theta$) of 90 degrees to about 110 degrees.

202. The method according to Clause 201, wherein the collection lens has a collection angle of 95 degrees to 105 degrees.

203. The method according to Clause 202, wherein the collection lens has a collection angle of 97 degrees to 103 degrees.

204. The method according to any one of Clauses 196 to 203, wherein a surface of the cuvette is separated from the flow channel by a distance ranging from 1.9 mm to 2.1 mm.

205. The method according to Clause 204, wherein the surface of the cuvette is separated from the flow channel by a distance ranging from 2 mm to 2.05 mm.

206. The method according to Clause 205, wherein the surface of the cuvette is separated from the flow channel by a distance ranging from 2.02 mm to 2.04 mm.

207. The method according to any one of Clauses 196 to 206, further comprising positioning an objective lens in optical communication with the light source and the flow cell.

208. The method according to Clause 207, wherein a surface of the cuvette is separated from the flow channel by a distance ranging from 5 mm to 5.2 mm.

209. The method according to Clause 208, wherein the surface of the cuvette is separated from the flow channel by a distance ranging from 5.05 mm to 5.1 mm.

210. The method according to Clause 209, wherein the surface of the cuvette is separated from the flow channel by a distance ranging from 5.07 mm to 5.09 mm.

211. The method according to any one of Clauses 204 to 210, wherein the surface of the cuvette comprises an anti-reflective coating.

212. The method according to any one of Clauses 174 to 211, wherein the cuvette has a height perpendicular to the rectangular cross-section of 5 mm to 9 mm.

213. The method according to Clause 212, wherein the height of the cuvette ranges from 6 mm to 8 mm.

214. The method according to Clause 213, wherein the height of the cuvette ranges from 7 mm to 7.2 mm.

215. The method according to any one of Clauses 174 to 214, wherein the cuvette has a length ranging from 8 mm to 12 mm.

216. The method according to Clause 215, wherein the length of the cuvette ranges from 9 mm to 11 mm.

217. The method according to Clause 216, wherein the length of the cuvette ranges from 10 mm to 10.2 mm.

218. The method according to any one of Clauses 174 to 217, wherein a width of the cuvette ranges from 2 mm to 6 mm.

219. The method according to Clause 218, wherein the width of the cuvette ranges from 3 mm to 5 mm.

220. The method according to Clause 219, wherein the width of the cuvette ranges from 4 mm to 4.1 mm.

221. The method according to Clause 174, wherein a ratio of a width of the rectangular cross-section of the flow channel to a width of the cuvette ranges from 1:8.9 to 1:21.8.

222. The method according to Clause 221, wherein the ratio of the width of the rectangular cross-section of the flow channel to the width of the cuvette ranges from 1:12.5 to 1:19.2.

223. The method according to Clause 222, wherein the ratio of the width of the rectangular cross-section of the flow channel to the width of the cuvette ranges from 1:16.1 to 1:16.3.

224. The method according to Clause 174, wherein a ratio of a width of the rectangular cross-section of the flow channel to a height perpendicular to the rectangular cross-section ranges from 1:22.2 to 1:32.7.

225. The method according to Clause 224, wherein the ratio of the width of the rectangular cross-section of the flow channel to the height perpendicular to the rectangular cross-section ranges from 1:25 to 1:30.1.

226. The method according to Clause 225, wherein the ratio of the width of the rectangular cross-section of the flow channel to the height perpendicular to the rectangular cross-section ranges from 1:28.2 to 1:28.6.

227. The method according to Clause 174, wherein a ratio of a length of the rectangular cross-section of the flow channel to a length of the cuvette ranges from 1:29.1 to 1:40.

228. The method according to Clause 227, wherein the ratio of the length of the rectangular cross-section of the flow channel to the length of the cuvette ranges from 1:31 to 1:35.6.

229. The method according to Clause 228, wherein the ratio of the length of the rectangular cross-section of the flow channel to the length of the cuvette ranges from 1:33.4 to 1:33.9.

230. The method according to Clause 174, wherein a ratio of a length of the rectangular cross-section of the flow channel to a height perpendicular to the rectangular cross-section ranges from 1:18.2 to 1:27.7.

231. The method according to Clause 230, wherein the ratio of the length of the rectangular cross-section of the flow channel to the height perpendicular to the rectangular cross-section ranges from 1:20.7 to 1:25.8.

232. The method according to Clause 231, wherein the ratio of the length of the rectangular cross-section of the flow channel to the height perpendicular to the rectangular cross-section ranges from 1:23.6 to 1:23.7.

233. The method according to any one of Clauses 174 to 232, wherein the cuvette is comprised of fused silica.

234. The method according to any one of Clauses 174 to 233, wherein the flow cell has a collection efficiency of 20% to 40%.

235. The method according to Clause 234, wherein the flow cell has a collection efficiency of 21% to 30%.

236. The method according to Clause 235, wherein the flow cell has a collection efficiency of 23% to 25%.

237. The method according to any one Clauses 174 to 236, wherein the rectangular cross-section of the flow channel is symmetric within a width, length, or both, of the cuvette.

238. The method according to any one of Clauses 174 to 237, wherein the flow channel extends through a height of the cuvette.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope of present disclosure is embodied by the appended claims.

**Claims**

1. A flow cytometer comprising:

   a flow cell comprising a cuvette configured to transport particles in a flow stream, the cuvette having a flow channel with a rectangular cross-section and an aspect ratio ranging from 1.0 to 1.4;
   a light source configured to irradiate the particles in the flow stream at an interrogation point within the flow cell; and
   a detector configured to collect light emitted by the irradiated particles.

2. The flow cytometer according to Claim 1, wherein the aspect ratio ranges from 1.1 to 1.3.

3. The flow cytometer according to any one of the preceding claims, wherein the rectangular cross-section of the flow channel has a length ranging from 275 μm to 325 μm, 290 μm to 310 μm or from 295 μm to 305 μm.

4. The flow cytometer according to any one of the preceding claims, wherein the rectangular cross-section of the flow channel has a width ranging from 225 μm to 275 μm, from 240 μm to 260 μm or from 245 μm to 255 μm.

5. The flow cytometer according to any one of the preceding claims, wherein the flow cytometer is configured as an imaging flow cytometer.

6. The flow cytometer according to Claim 5, wherein the light source comprises a light beam generator component configured to generate at least a first beam of frequency shifted light and a second beam of frequency shifted light.

7. The flow cytometer according to any one of the preceding claims, further comprising a sample fluid line configured to provide the particles to the flow cell.

8. The flow cytometer according to Claim 7, configured to operate in:

   (c) an imaging mode wherein the flow cytometer is configured to provide the particles in the flow stream to the flow cell at a first velocity; and
   (d) a non-imaging mode wherein the flow cytometer is configured to provide the particles in the flow stream to the flow cell at a second velocity that is greater than the first velocity.

9. The flow cytometer according to any one of the preceding claims, further comprising a collection lens in optical communication with the flow cell and the detector.

10. The flow cytometer according to any one of the preceding claims, wherein the cuvette has a height perpendicular to the rectangular cross-section of 5 mm to 9 mm.

11. The flow cytometer according to any one of the preceding claims, wherein the cuvette is comprised of fused silica.

12. The flow cytometer according to any one of the preceding claims, wherein the rectangular cross-section of the flow channel is symmetric within a width, length, or both, of the cuvette.

13. The flow cytometer according to any one of the preceding claims, wherein the flow channel extends through a height of the cuvette.

14. A method of analyzing a sample fluid, the method comprising:

   (a) introducing a sample fluid into a flow cytometer comprising:

      a flow cell comprising a cuvette configured to transport particles in a flow stream, the cuvette having a flow channel with a rectangular cross-section and an aspect ratio ranging from 1.0 to 1.4;
      a light source configured to irradiate the particles in the flow stream at an interrogation point within the flow cell; and
      a detector configured to collect light emitted by the irradiated particles; and

   (b) irradiating the particles in the flow stream to analyze the sample fluid.

15. A flow cell comprising a cuvette configured to transport particles in a flow stream, the cuvette having a flow channel with a rectangular cross-section and an aspect ratio ranging from 1.0 to 1.4.

# FIG. 1A

FIG. 1B

EP 4 644 862 A1

FIG. 1C

## FIG. 2

EP 4 644 862 A1

# FIG. 3

# FIG. 3 (Cont.)

# FIG. 4

FIG. 5

# FIG. 6A

FIG. 6B

# FIG. 7

COMPUTER SYSTEM
700

PROCESSING UNIT
710

NETWORK INTERFACE
720

COMPUTER READABLE MEDIUM
730

INPUT/OUTPUT DEVICE INTERFACE
740

MEMORY
770

OPERATING SYSTEM
772

DISPLAY
(OPTIONAL)
750

INPUT DEVICE
(OPTIONAL)
760

DATA STORE
790

EP 4 644 862 A1

| Key | Dim (um) | 50 | 75 | 100 | 125 | 150 | 175 | 200 | 225 | 250 | 275 | 300 | 325 | 350 | 375 | 400 | 425 | 450 | 475 | 500 |
|---|---|---|---|---|---|---|---|---|---|---|---|---|---|---|---|---|---|---|---|---|
| Constraint | 50 | 1.00 | 1.50 | 2.00 | 2.50 | 3.00 | 3.50 | 4.00 | 4.50 | 5.00 | 5.50 | 6.00 | 6.50 | 7.00 | 7.50 | 8.00 | 8.50 | 9.00 | 9.50 | 10.0 |
| Q @ 1 m/s < 1 ml/min | 75 | 0.67 | 1.00 | 1.33 | 1.67 | 2.00 | 2.33 | 2.67 | 3.00 | 3.33 | 3.67 | 4.00 | 4.33 | 4.67 | 5.00 | 5.33 | 5.67 | 6.00 | 6.33 | 6.67 |
| Q @ 3.3 m/s > 20 ml/min | 100 | 0.50 | 0.75 | 1.00 | 1.25 | 1.50 | 1.75 | 2.00 | 2.25 | 2.50 | 2.75 | 3.00 | 3.25 | 3.50 | 3.75 | 4.00 | 4.25 | 4.50 | 4.75 | 5.00 |
| Q @ 5.5 m/s > 20 ml/min | 125 | 0.40 | 0.60 | 0.80 | 1.00 | 1.20 | 1.40 | 1.60 | 1.80 | 2.00 | 2.20 | 2.40 | 2.60 | 2.80 | 3.00 | 3.20 | 3.40 | 3.60 | 3.80 | 4.00 |
| dP @ 1 m/s > 6 psi | 150 | 0.33 | 0.50 | 0.67 | 0.83 | 1.00 | 1.17 | 1.33 | 1.50 | 1.67 | 1.83 | 2.00 | 2.17 | 2.33 | 2.50 | 2.67 | 2.83 | 3.00 | 3.17 | 3.33 |
| dP @ 3.3 m/s > 6 psi | 175 | 0.29 | 0.43 | 0.57 | 0.71 | 0.86 | 1.00 | 1.14 | 1.29 | 1.43 | 1.57 | 1.71 | 1.86 | 2.00 | 2.14 | 2.29 | 2.43 | 2.57 | 2.71 | 2.86 |
| dP @ 5.5 m/s > 6 psi | 200 | 0.25 | 0.38 | 0.50 | 0.63 | 0.75 | 0.88 | 1.00 | 1.13 | 1.25 | 1.38 | 1.50 | 1.63 | 1.75 | 1.88 | 2.00 | 2.13 | 2.25 | 2.38 | 2.50 |
| Dcore @ 1 m/s > 50um | 225 | 0.22 | 0.33 | 0.44 | 0.56 | 0.67 | 0.78 | 0.89 | 1.00 | 1.11 | 1.22 | 1.33 | 1.44 | 1.56 | 1.67 | 1.78 | 1.89 | 2.00 | 2.11 | 2.22 |
| Dcore @ 3.3 m/s > 50um | 250 | 0.20 | 0.30 | 0.40 | 0.50 | 0.60 | 0.70 | 0.80 | 0.90 | 1.00 | 1.10 | 1.20 | 1.30 | 1.40 | 1.50 | 1.60 | 1.70 | 1.80 | 1.90 | 2.00 |
| Dcore @ 5.5 m/s > 50um | 275 | 0.18 | 0.27 | 0.36 | 0.45 | 0.55 | 0.64 | 0.73 | 0.82 | 0.91 | 1.00 | 1.09 | 1.18 | 1.27 | 1.36 | 1.45 | 1.55 | 1.64 | 1.73 | 1.82 |
| Dcore @ 1 m/s > 50um | 300 | 0.17 | 0.25 | 0.33 | 0.42 | 0.50 | 0.58 | 0.67 | 0.75 | 0.83 | 0.92 | 1.00 | 1.08 | 1.17 | 1.25 | 1.33 | 1.42 | 1.50 | 1.58 | 1.67 |
| Dcore @ 3.3 m/s > 50um | 325 | 0.15 | 0.23 | 0.31 | 0.38 | 0.46 | 0.54 | 0.62 | 0.69 | 0.77 | 0.85 | 0.92 | 1.00 | 1.08 | 1.15 | 1.23 | 1.31 | 1.38 | 1.46 | 1.54 |
| Dcore @ 5.5 m/s > 50um | 350 | 0.14 | 0.21 | 0.29 | 0.36 | 0.43 | 0.50 | 0.57 | 0.64 | 0.71 | 0.79 | 0.86 | 0.93 | 1.00 | 1.07 | 1.14 | 1.21 | 1.29 | 1.36 | 1.43 |
| | 375 | 0.13 | 0.20 | 0.27 | 0.33 | 0.40 | 0.47 | 0.53 | 0.60 | 0.67 | 0.73 | 0.80 | 0.87 | 0.93 | 1.00 | 1.07 | 1.13 | 1.20 | 1.27 | 1.33 |
| | 400 | 0.13 | 0.19 | 0.25 | 0.31 | 0.38 | 0.44 | 0.50 | 0.56 | 0.63 | 0.69 | 0.75 | 0.81 | 0.88 | 0.94 | 1.00 | 1.06 | 1.13 | 1.19 | 1.25 |
| | 425 | 0.12 | 0.18 | 0.24 | 0.29 | 0.35 | 0.41 | 0.47 | 0.53 | 0.59 | 0.65 | 0.71 | 0.76 | 0.82 | 0.88 | 0.94 | 1.00 | 1.06 | 1.12 | 1.18 |
| | 450 | 0.11 | 0.17 | 0.22 | 0.28 | 0.33 | 0.39 | 0.44 | 0.50 | 0.56 | 0.61 | 0.67 | 0.72 | 0.78 | 0.83 | 0.89 | 0.94 | 1.00 | 1.06 | 1.11 |
| | 475 | 0.11 | 0.16 | 0.21 | 0.26 | 0.32 | 0.37 | 0.42 | 0.47 | 0.53 | 0.58 | 0.63 | 0.68 | 0.74 | 0.79 | 0.84 | 0.89 | 0.95 | 1.00 | 1.05 |
| | 500 | 0.10 | 0.15 | 0.20 | 0.25 | 0.30 | 0.35 | 0.40 | 0.45 | 0.50 | 0.55 | 0.60 | 0.65 | 0.70 | 0.75 | 0.80 | 0.85 | 0.90 | 0.95 | 1.00 |

FIG. 8

# FIG. 9

# FIG. 10A

### Collection CV vs bead extreme displacement in the core

EP 4 644 862 A1

# FIG. 10B

Collection CV vs bead extreme displacement in the core

EP 4 644 862 A1

Europäisches
Patentamt
European
Patent Office
Office européen
des brevets

# EUROPEAN SEARCH REPORT

**Application Number**

EP 25 17 3858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIVHARE P K ET AL: "Hydrodynamic focusing and interdistance control of particle-laden flow for microflow cytometry", MICROFLUIDICS AND NANOFLUIDICS, SPRINGER BERLIN HEIDELBERG, BERLIN/HEIDELBERG, vol. 20, no. 6, 27 May 2016 (2016-05-27), pages 1-14, XP035695645, ISSN: 1613-4982, DOI: 10.1007/S10404-016-1752-Z [retrieved on 2016-05-27] * Title,abstract,section 4.1; figure 5c * | 1-4,6-15 | INV. G01N15/14 G01N15/1434 G01N21/00 ADD. G01N15/1404 |
| X | WO 2014/133451 A1 (ACOUSORT AB [SE]) 4 September 2014 (2014-09-04) * page 7, line 18 * * page 4, line 26 * * page 15, line 14 * * page 10, lines 19-23 * | 1,3-15 | |

-----

-----

**TECHNICAL FIELDS SEARCHED (IPC)**

G01N

The present search report has been drawn up for all claims

| Place of search | Date of completion of the search | Examiner |
|---|---|---|
| The Hague | 16 September 2025 | Böhler, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 3858

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | Publication date | Patent family member(s) | Publication date |
|---|---|---|---|
| WO 2014133451 A1 | 04-09-2014 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63642501
- US 9423353 B
- US 9784661 B
- US 10006852 B
- US 20170133857 A
- US 20170350803 A
- US 20220341838
- US 10663476 B
- US 10620111 B
- US 10613017 B
- US 10605713 B
- US 10585031 B
- US 10578542 B
- US 10578469 B
- US 10481074 B
- US 10302545 B
- US 10145793 B
- US 10113967 B
- US 9952076 B
- US 9933341 B
- US 9726527 B
- US 9453789 B
- US 9200334 B
- US 9097640 B
- US 9095494 B
- US 9092034 B
- US 8975595 B
- US 8753573 B
- US 8233146 B
- US 8140300 B
- US 7544326 B
- US 7201875 B
- US 7129505 B
- US 6821740 B
- US 6813017 B
- US 6809804 B
- US 6372506 B
- US 5700692 A
- US 5643796 A
- US 5627040 A
- US 5620842 A
- US 5602039 A
- US 4987086 A
- US 4498766 A
- US 63431803 A
- US 63465057 B
- US 20170299493 A
- US 20200256781 A
- US 20210404943 A
- US 7679039 B

**Non-patent literature cited in the description**

- Flow Cytometry: A Practical Approach. Oxford Univ. Press, 1997
- Flow Cytometry Protocols. Methods in Molecular Biology. Humana Press, 1997
- Practical Flow Cytometry. Wiley-Liss, 1995
- **VIRGO et al.** *Ann Clin Biochem.*, April 2012, vol. 49 (1), 17-28
- **LINDEN**. *Semin Throm Hemost.*, October 2004, vol. 30 (5), 502-11
- **ALISON et al.** *J Pathol*, December 2010, vol. 222 (4), 335-344
- **HERBIG et al.** *Crit Rev Ther Drug Carrier Syst.*, 2007, vol. 24 (3), 203-255
- **DIEBOLD et al.** *Nature Photonics*, vol. 7 (10)
- **SCHRAIVOGEL et al.** High-speed fluorescence image-enabled cell sorting. *Science*, 2022, vol. 375 (6578), 315-320